(19) Europäisches Patentamt
European Patent Office
Office européen des brevets

(11) **EP 4 598 104 A1**

(12) **EUROPEAN PATENT APPLICATION**
published in accordance with Art. 153(4) EPC

(43) Date of publication:
06.08.2025 Bulletin 2025/32

(21) Application number: 23873262.2

(22) Date of filing: 27.09.2023

(51) International Patent Classification (IPC):
H04W 24/08 (2009.01)    H04J 11/00 (2006.01)
H04B 17/345 (2015.01)    H04W 24/10 (2009.01)
H04L 5/00 (2006.01)

(52) Cooperative Patent Classification (CPC):
H04B 17/345; H04J 11/00; H04L 5/00;
H04W 24/08; H04W 24/10

(86) International application number:
PCT/KR2023/015123

(87) International publication number:
WO 2024/072155 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022  US 202263411645 P
18.09.2023  KR 20230124002

(71) Applicant: LG Electronics Inc.
Yeongdeungpo-gu
Seoul 07336 (KR)

(72) Inventors:
• KO, Hyunsoo
  Seoul 06772 (KR)
• YOU, Hyangsun
  Seoul 06772 (KR)
• SHIM, Jaenam
  Seoul 06772 (KR)

(74) Representative: Frenkel, Matthias Alexander
Wuesthoff & Wuesthoff
Patentanwälte und Rechtsanwalt PartG mbB
Schweigerstraße 2
81541 München (DE)

(54) **DEVICE AND METHOD FOR PERFORMING RESOURCE SETTING IN WIRELESS COMMUNICATION SYSTEM**

(57) A method of operating a user equipment in a wireless communication system is provided. The method includes receiving, from a base station, a command to measure a reference signal received power (RSRP) of a sounding reference signal (SRS) of another UE within a time duration in which a subband full duplex (SBFD) is available; receiving, from the base station, configuration information on a measurement gap or a downlink rate-matching resource within a measurement time duration of the SRS; receiving, the SRS in the measurement gap or the downlink rate-matching resource; and transmitting, to the base station, a report message for a measurement result of the RSRP for the SRS.

【FIG. 6】

## Description

[Technical Field]

The present disclosure relates to a wireless communication system. More particularly, the present disclosure relates to a device and method for performing a resource configuration in a wireless communication system.

[Background Art]

In 5G, new types of services such as extended reality (XR), AI-based services, and self-driving cars are emerging, and these services have the characteristics of dynamically changing traffic in both downlink (DL) and uplink (UL) directions and requiring low latency for packet transmission. In order to support these various new use cases, traffic loads in 5G services will explosively increase.

On the other hand, the existing semi-static or dynamic TDD UL/DL configuration has limitations such as transmission time delay and interference between operators. The existing FDD scheme has limitations in terms of efficient frequency resource utilization for the DL/UL direction.

Accordingly, the introduction of full duplex operation within a single carrier is being discussed for low delay time and efficient resource utilization in NR.

[Disclosure]

[Technical Problem]

In order to solve the above-described and other problems, the present disclosure provides a device and method for performing a resource configuration in a wireless communication system.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

According to various embodiments of the present disclosure, there is provided a method of operating a user equipment (UE) in a wireless communication system comprising receiving, from a base station (BS), a command to measure a reference signal received power (RSRP) of a sounding reference signal (SRS) of another UE within a time duration in which a subband full duplex (SBFD) is available; receiving, from the base station, configuration information on a measurement gap or a downlink rate-matching resource within a measurement time duration of the SRS; receiving, the SRS in the measurement gap or the downlink rate-matching resource; and transmitting, to the base station, a report message for a measurement result of the RSRP for the SRS.

According to various embodiments of the present disclosure, there is provided a method of operating a base station in a wireless communication system comprising transmitting, to a user equipment (UE), a command to measure a reference signal received power (RSRP) of a sounding reference signal (SRS) of another UE within a time duration in which a subband full duplex (SBFD) is available; transmitting, to the UE, configuration information on a measurement gap or a downlink rate-matching resource within a measurement time duration of the SRS; and receiving, from the UE, a report message for a measurement result of the RSRP for the SRS based on the measurement gap or the downlink rate-matching resource.

According to various embodiments of the present disclosure, there is provided a user equipment (UE) in a wireless communication system, the UE comprising a transceiver, at least one processor, and at least one memory operably connectable to the at least one processor and configured to store instructions performing operations based on being executed by the at least one processor, wherein the operations comprise all steps of a method of operating the UE according to various embodiments of the present disclosure.

According to various embodiments of the present disclosure, there is provided a base station in a wireless communication system, the base station comprising a transceiver, at least one processor, and at least one memory operably connectable to the at least one processor and configured to store instructions performing operations based on being executed by the at least one processor, wherein the operations comprise all steps of a method of operating the base station according to various embodiments of the present disclosure.

According to various embodiments of the present disclosure, there is provided a control device controlling a user equipment (UE) in a wireless communication system, the control device comprising at least one processor and at least one memory operably connectable to the at least one processor, wherein the at least one memory is configured to store instructions performing operations based on being executed by the at least one processor, and the operations comprise all steps of a method of operating the UE according to various embodiments of the present disclosure.

According to various embodiments of the present disclosure, there is provided a control device controlling a base station in a wireless communication system, the control device comprising at least one processor and at least one memory operably connectable to the at least one processor, wherein the at least one memory is configured to store instructions performing operations based on being executed by the at least one processor, and the operations comprise all steps of a method of operating the base station according to various embodiments of the present disclosure.

According to various embodiments of the present disclosure, there are provided one or more non-transitory computer readable mediums storing one or more instructions, wherein the one or more instructions are configured to perform operations based on being executed by one or more processors, and the operations comprise all steps of a method of operating a user equipment (UE) according to various embodiments of the present disclosure.

According to various embodiments of the present disclosure, there are provided one or more non-transitory computer readable mediums storing one or more instructions, wherein the one or more instructions are configured to perform operations based on being executed by one or more processors, and the operations comprise all steps of a method of operating a base station according to various embodiments of the present disclosure.

[Advantageous Effects]

In order to solve the above-described and other problems, the present disclosure can provide a device and method for performing a resource configuration in a wireless communication system.

[Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.

FIG. 1 illustrates physical channels used in a system applicable to the present disclosure and an example of a general signal transmission method using the physical channels.

FIG. 2 illustrates an example of a structure of a radio frame used in a system applicable to the present disclosure.

FIG. 3 illustrates an example of a slot structure used in a system applicable to the present disclosure.

FIG. 4 illustrates an example of a slot structure used in a system applicable to the present disclosure.

FIG. 5 illustrates an example of a structure of a radio frame used in a system applicable to the present disclosure.

FIG. 6 illustrates an example of a structure in which a resource operating in half duplex (HD) and a resource operating in full duplex (FD) such as SB-FD or SS-FD coexist in a system applicable to the present disclosure.

FIG. 7 illustrates an example of a structure in which a resource operating in half duplex (HD) and a resource operating in full duplex (FD) such as SB-FD or SS-FD coexist in a system applicable to the present disclosure.

FIG. 8 illustrates an example of a structure in which a resource operating in half duplex (HD) and a resource operating in full duplex (FD) such as SB-FD or SS-FD coexist in a system applicable to the present disclosure.

FIG. 9 illustrates an example of a structure in which a resource operating in half duplex (HD) and a resource operating in full duplex (FD) such as SB-FD or SS-FD coexist in a system applicable to the present disclosure.

FIG. 10 illustrates an example of a structure in which a resource operating in half duplex (HD) and a resource operating in full duplex (FD) such as SB-FD or SS-FD coexist in a system applicable to the present disclosure.

FIG. 11 illustrates an example of a structure in which a resource operating in half duplex (HD) and a resource operating in full duplex (FD) such as SB-FD or SS-FD coexist in a system applicable to the present disclosure.

FIG. 12 illustrates an example of a structure in which a resource operating in half duplex (HD) and a resource operating in full duplex (FD) such as SB-FD or SS-FD coexist in a system applicable to the present disclosure.

FIG. 13 illustrates an example of information indicating a downlink resource and an uplink resource based on antenna configuration in a system applicable to the present disclosure.

FIG. 14 illustrates an example of a separate-Tx/Rx antenna array model in a system applicable to the present disclosure.

FIG. 15 illustrates an example of (a) legacy TDD with shared-Tx/Rx antenna array in a system applicable to the present disclosure.

FIG. 16 illustrates an example of (b) SBFD antenna configuration Option-1 (Method 1) in a system applicable to the present disclosure.

FIG. 17 illustrates an example of (c) SBFD antenna configuration Option-2 (Method 2-1) in a system applicable to the present disclosure.

FIG. 18 illustrates an example of (d) SBFD antenna configuration Option-2 (Method 2-2) in a system applicable to the present disclosure.

FIG. 19 illustrates an example of (e) SBFD antenna configuration Option-3 (Method 3-1) in a system applicable to the present disclosure.

FIG. 20 illustrates an example of (f) SBFD antenna configuration Option-3 (Method 3-2) in a system applicable to the present disclosure.

FIG. 21 illustrates an example of an operation process of a UE in a system applicable to the present disclosure.

FIG. 22 illustrates an example of an operation process of a base station in a system applicable to the present disclosure.

FIG. 23 illustrates an example of a structure of a first device and a second device in a system applicable to the present disclosure.

[Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

## General Signal Transmission Method in 3GPP

## Physical Channels and General Signal Transmission

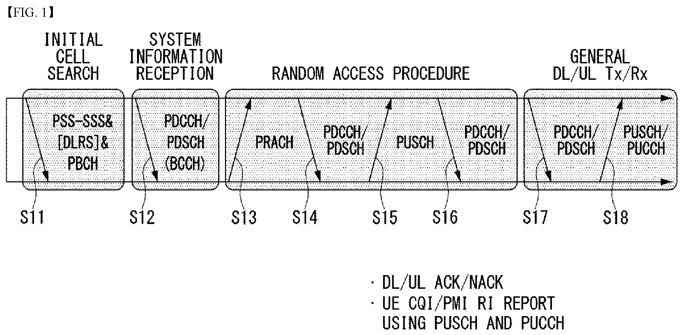

FIG. 1 illustrates physical channels used in a system applicable to the present disclosure and an example of a general signal transmission method using the physical channels. More specifically, FIG. 1 illustrates physical channels and general signal transmission used in the 3GPP system.

FIG. 1 illustrates physical channels and general signal transmission used in the 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

A UE that is powered on again while being powered off or enters a new cell performs an initial cell search operation such as synchronizing with a base station (BS) in S11. To this end, the UE receives a primary synchronization channel (PSCH) and a secondary synchronization channel (SSCH) from the base station to synchronize with the base station and acquires information such as a cell identity (ID), etc. Further, the UE may receive a physical broadcast channel (PBCH) from the base station and acquire in-cell broadcast information. The UE may receive a downlink reference signal (DL RS) in an initial cell search step to check a downlink channel state.

The UE that completes the initial cell search may receive a physical downlink control channel (PDCCH) and a physical downlink shared channel (PDSCH) corresponding to the PDCCH to acquire more detailed system information, in S12.

Next, the UE may perform a random access procedure in order to complete an access to the base station, in S13 to S16. Specifically, the UE may transmit a preamble on a physical random access channel (PRACH) in S13, and receive a random access response (RAR) for the preamble on the PDCCH and the PDSCH corresponding to the PDCCH in S14. Thereafter, the UE may transmit a physical uplink shared channel (PUSCH) using scheduling information within the RAR in S15, and perform a contention resolution procedure such as the PDCCH and the PDSCH corresponding to the PDCCH in S16.

Next, the UE that performs the above-described procedure may perform PDCCH/PDSCH reception S17 and PUSCH/physical uplink control channel (PUCCH) transmission S18, as a general uplink/downlink signal transmission procedure. Control information that the UE transmits to the base station is referred to as uplink control information (UCI). The UCI includes hybrid automatic repeat and request (HARQ) acknowledgement/negative ACK (ACK/NACK), scheduling request (SR), channel state information (CSI), etc. The CSI includes a channel quality indication (CQI), a precoding matrix indicator (PMI), a rank indicator (RI), etc. The UCI is generally transmitted on the PUCCH, but if control information and data need to be transmitted at the same time, the UCI may be transmitted on the PUSCH. The UE may aperiodically transmit the UCI on the PUSCH based on a request/indication of the network.

## Orthogonal Frequency Division Multiplexing (OFDM) Numerology

A new RAT system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

## Radio Frame Structure

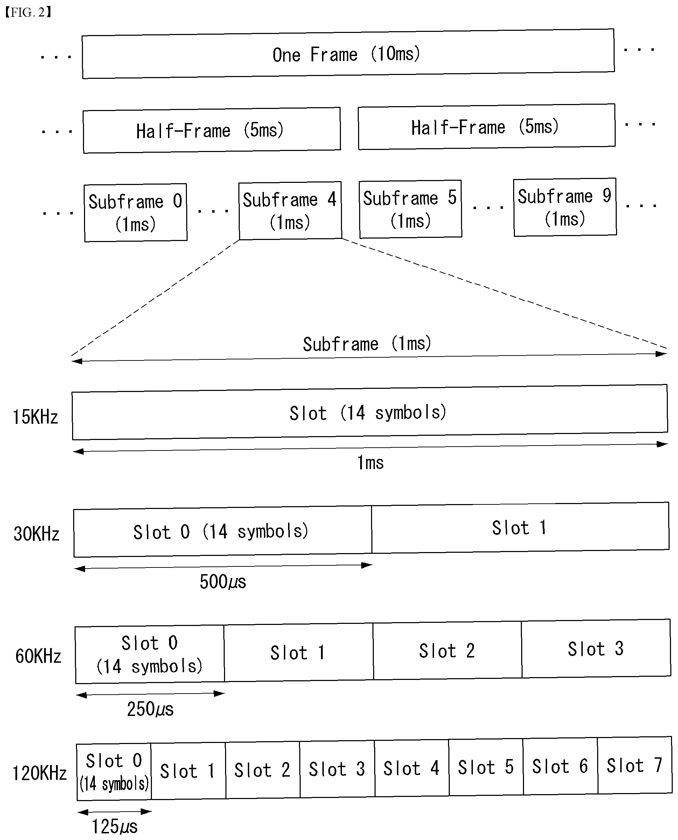

FIG. 2 illustrates an example of a structure of a radio frame used in a system applicable to the present disclosure.
In NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).
Table 1 shows that when the normal CP is used, the number of symbols per slot, the number of slots per frame, and the number of slots per subframe vary depending on the SCS.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

$N^{slot}_{symb}$ is the number of symbols in the slot. $N^{frame,u}_{slot}$ is the number of slots in the frame. $N^{subframe,u}_{slot}$ is the number of slots in the subframe.
Table 2 shows that when the extended CP is used, the number of symbols per slot, the number of slots per frame, and the number of slots per subframe vary depending on the SCS.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

The NR supports multiple numerologies (or subcarrier spacing (SCS)) for supporting various 5G services. For example, when the SCS is 15 kHz, a wide area in traditional cellular bands is supported, when the SCS is 30 kHz/60 kHz, dense-urban, lower latency, and wider carrier bandwidth are supported, and when the SCS is 60 kHz or more, a bandwidth larger than 24.25 GHz is supported to overcome phase noise.

An NR frequency band may be defined as two types of frequency ranges (FR1 and FR2). Values of the frequency ranges may be changed, and, for example, the two types of frequency ranges (FR1 and FR2) may be as shown in Table 3 below. For convenience of description, among frequency ranges used in an NR system, FR1 may denote "sub 6GHz range", and FR2 may denote "above 6GHz range" and may be referred to as millimeter wave (mmW).

[Table 3]

| Frequency Range Designation | Corresponding Frequency Range | Subcarrier Spacing |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, FR1 may include a frequency band from 410 MHz to 7125 MHz, as shown in Table 4 below. That is, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 mat include an unlicensed band. The unlicensed band may be used for diverse purposes, for example, used for communication for vehicles (e.g., self-driving).

[Table 4]

| Frequency Range Designation | Corresponding Frequency Range | Subcarrier Spacing |
|---|---|---|
| FR1 | 410MHz - 7125MHz | 15, 30, 60kHz |
| FR2 | 24250MHz - 52600MHz | 60, 120, 240kHz |

In the NR system, OFDM(A) numerology (e.g., SCS, CP length, etc.) may be differently configured between a plurality of cells merged into one UE. Hence, an (absolute time) duration of a time resource (e.g., SF, slot or TTI) (for convenience, collectively referred to as a time unit (TU)) consisting of the same number of symbols may be configured differently between the merged cells.

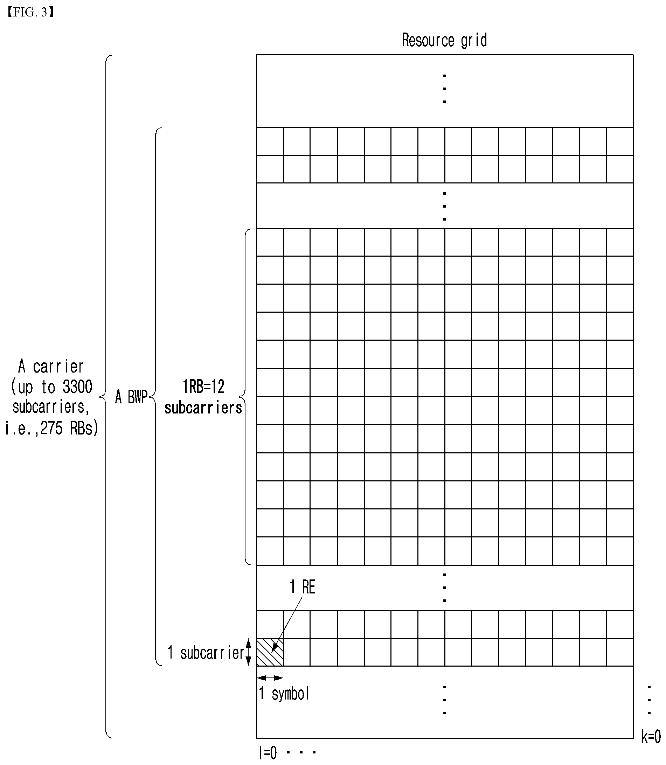

FIG. 3 illustrates an example of a slot structure used in a system applicable to the present disclosure.

A slot includes a plurality of symbols in a time domain. For example, one slot includes 7 symbols in a normal CP, while one slot includes 6 symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., 5) BWPs. The data communication may be performed through an activated BWP, and only one BWP may be activated in one UE. In a resource grid, each element is referred to as a resource element (RE), and one complex symbol may be mapped to each RE.

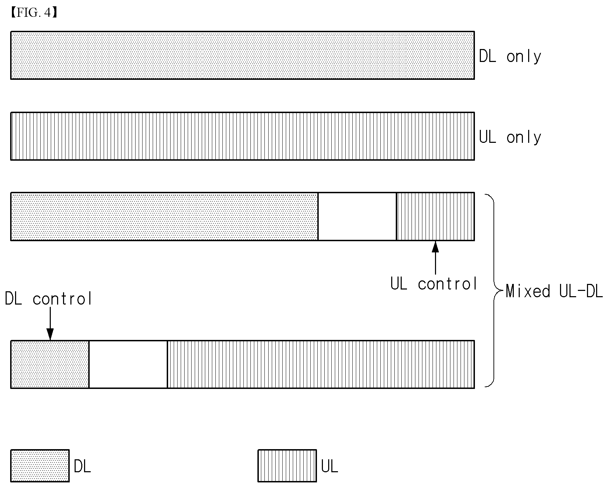

FIG. 4 illustrates an example of a slot structure used in a system applicable to the present disclosure.

More specifically, FIG. 4 illustrates an example of a structure of a self-contained slot.

In the NR system, a frame is characterized by a self-contained structure in which all of a DL control channel, DL or UL data, and a UL control channel can be included in one slot. For example, the first N symbols in the slot may be used to transmit the DL control channel (hereinafter, referred to as a DL control region), and the last M symbols in the slot may be used to transmit the UL control channel (hereinafter, referred to as a UL control region), where N and M are an integer greater than or equal to 0. A resource region (hereinafter, referred to as a data region) between the DL control region and the UL control region may be used for DL data transmission or UL data transmission. For example, the following configuration may be considered. Each duration is listed in chronological order.

1. DL only configuration
2. UL only configuration
3. Mixed UL-DL configuration

- DL region + Guard Period (GP) + UL control region
- DL control region + GP + UL region

  * DL region: (i) DL data region, (ii) DL control region + DL data region
  * UL region: (i) UL data region, (ii) UL data region + UL control region

The PDCCH may be transmitted in the DL control region, and the PDSCH may be transmitted in the DL data region. The PUCCH may be transmitted in the UL control region, and the PUSCH may be transmitted in the UL data region. On the PDCCH, downlink control information (DCI), for example, DL data scheduling information, UL data scheduling information, etc., may be transmitted. On the PUCCH, uplink control information (UCI), for example, positive acknowledgement/negative acknowledgement (ACK/NACK) information, channel state information (CSI), scheduling request (SR), etc., for DL data may be transmitted. The GP provides a time gap in a process of switching the base station and the UE from a transmission mode to a reception mode or a process of switching from the reception mode to the transmission mode. Some symbols at time at which DL is switched to UL in the subframe may be configured as the GP.

**Full duplex operation for NR**

In 5G, new types of services such as extended reality (XR), AI-based services, and self-driving cars are emerging, and these services have the characteristics of dynamically changing traffic in both downlink (DL) and uplink (UL) directions and requiring low latency for packet transmission. In order to support these various new use cases, traffic loads in 5G services will explosively increase.

On the other hand, the existing semi-static or dynamic TDD UL/DL configuration has limitations such as transmission time delay and interference between operators. The existing FDD scheme has limitations in terms of efficient frequency resource utilization for the DL/UL direction.

Accordingly, the introduction of full duplex operation within a single carrier is being discussed for low delay time and efficient resource utilization in NR.

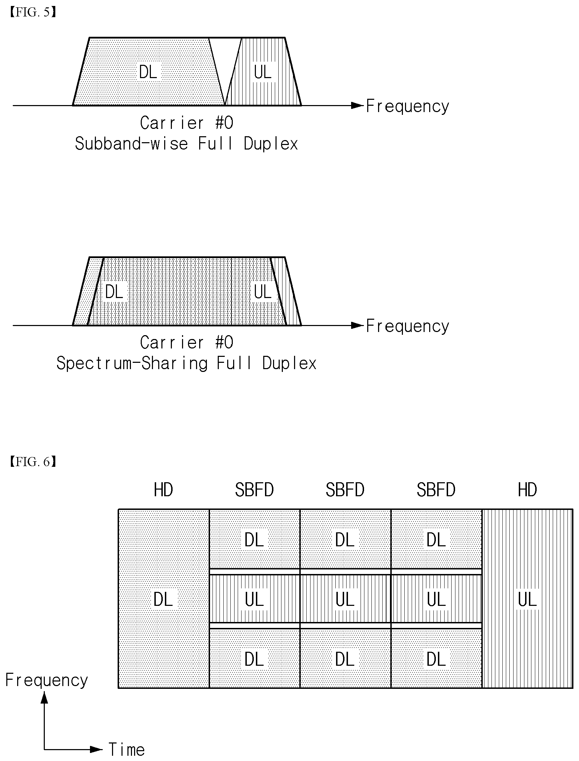

FIG. 5 illustrates an example of a structure of a radio frame used in a system applicable to the present disclosure.

As an example of a method of applying full duplex in an intra-carrier, subband-wise full duplex (SB-FD) and spectrum-sharing full duplex (SS-FD) may be considered as illustrated in FIG. 5. In the SB-FD, transmission and reception of DL and UL are performed with different frequency resources in the same carrier. That is, DL and UL have different frequency resources for the same time resource. In the SS-FD, transmission and reception of DL and UL are performed through the same frequency resource or overlapped frequency resources in the same carrier. That is, DL and UL may have the same or overlapped frequency resources for the same time resource.

This full-duplex operation may be used in combination with the existing half-duplex operation. In an existing half-duplex-based TDD operation, only some time resources may be used for the full-duplex operation. In time resources performing the full-duplex operation, SB-FD or SS-FD operation may be performed.

FIG. 6 illustrates an example of a structure in which a resource operating in half duplex (HD) and a resource operating in full duplex (FD) such as SB-FD or SS-FD coexist in a system applicable to the present disclosure.

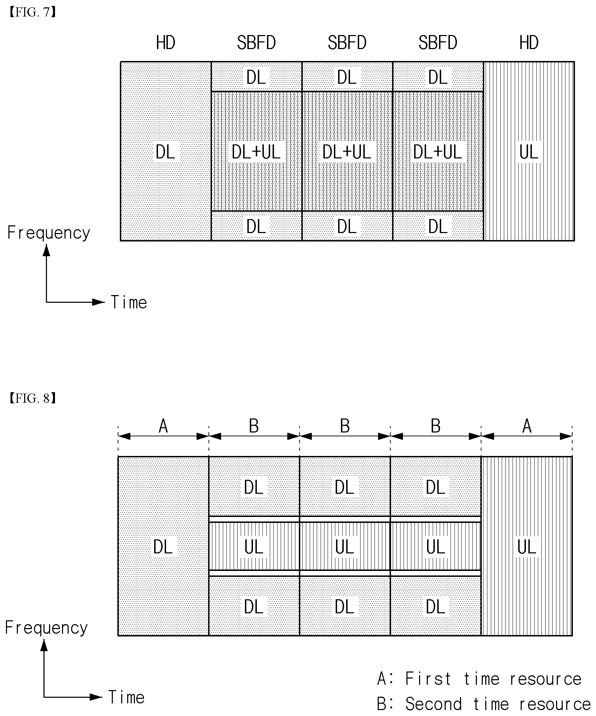

FIG. 7 illustrates an example of a structure in which a resource operating in half duplex (HD) and a resource operating in full duplex (FD) such as SB-FD or SS-FD coexist in a system applicable to the present disclosure.

FIGS. 6 and 7 illustrate an example where a time resource operating in half duplex (HD) and a time resource operating in full duplex (FD) such as SB-FD or SS-FD coexist. In FIG. 6, some time resources operate in SB-FD, and remaining time resources operate in HD. In FIG. 7, some time resources operate in SS-FD, and remaining time resources operate in HD. In this instance, the unit of the time resource may be, for example, a slot or a symbol.

In the time resource operating in SB-FD, some frequency resources are used as DL resources, and some frequency resources are used as UL resources. Between the DL and UL frequency resources, there may be a guard band (or guard frequency resource or guard subcarrier(s)) that is not used for both DL and UL and is empty. In the time resource operating in SF-FD, the entire frequency resource may be used for both DL and UL. Alternatively, some frequency resources at one end or both ends of a carrier may not be used for DL and/or UL to reduce an impact of interference from other adjacent carriers (i.e., adjacent carrier interference (ACI)). That is, one end or both ends of the carrier may be used as the guard band that is not used for both DL and UL. Alternatively, one end or both ends of the carrier may be used only for DL transmission to reduce the impact of ACI on UL reception.

In the present disclosure, a slot resource operating in HD is referred to as a HD slot, and a slot resource operating in SB-FD and a slot resource operating in SS-FD are referred to as an SB-FD slot and an SS-FD slot, respectively. Additionally, the SB-FD slot and the SS-FD slot are collectively referred to as a FD slot.

In the present disclosure, in time resources operating in FD, a frequency resource operating in DL among all frequency resources is referred to as a DL sub-band, and a frequency resource operating in UL is referred to as a UL sub-band.

In the full duplex operation as described above, both the gNB and the UE may perform the full duplex operation. That is, both the gNB and the UE may simultaneously perform DL and UL transmission and reception using the same or different frequency resources in the same time resource. On the other hand, only the gNB may perform the full duplex operation, and the UE may perform the half duplex operation. The gNB may simultaneously perform DL and UL transmission and reception using the same or different frequency resources in the same time resource, but the UE performs only DL reception or UL transmission in a specific time resource. In this case, the gNB performs the full duplex operation by performing DL transmission and UL reception with different UEs at the same time.

The present disclosure is generally described assuming that the gNB performs the full duplex operation, and the UE performs the half duplex operation. However, the present disclosure can also be applied when both the gNB and the UE perform the full duplex operation.

### Technical Problem to be solved by the invention

In the following, the term network may be interpreted by replacing a gNB (next generation Node B) or a centralized unit (CU)/distributed unit (DU). The term user equipment (UE) may be interpreted by replacing a mobile termination (MT) of Integrated Access/Backhaul (IAB)-node.

### Characteristics of DL/UL time/frequency resources for SB-FD and SS-FD operations

FIG. 8 illustrates an example of a structure in which a resource operating in half duplex (HD) and a resource operating in full duplex (FD) such as SB-FD or SS-FD coexist in a system applicable to the present disclosure.

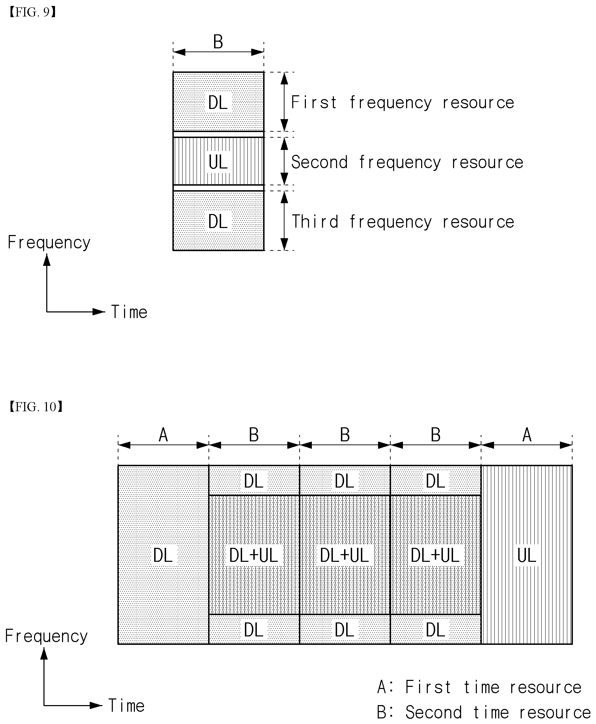

FIG. 9 illustrates an example of a structure in which a resource operating in half duplex (HD) and a resource operating in full duplex (FD) such as SB-FD or SS-FD coexist in a system applicable to the present disclosure.

FIG. 10 illustrates an example of a structure in which a resource operating in half duplex (HD) and a resource operating in full duplex (FD) such as SB-FD or SS-FD coexist in a system applicable to the present disclosure.

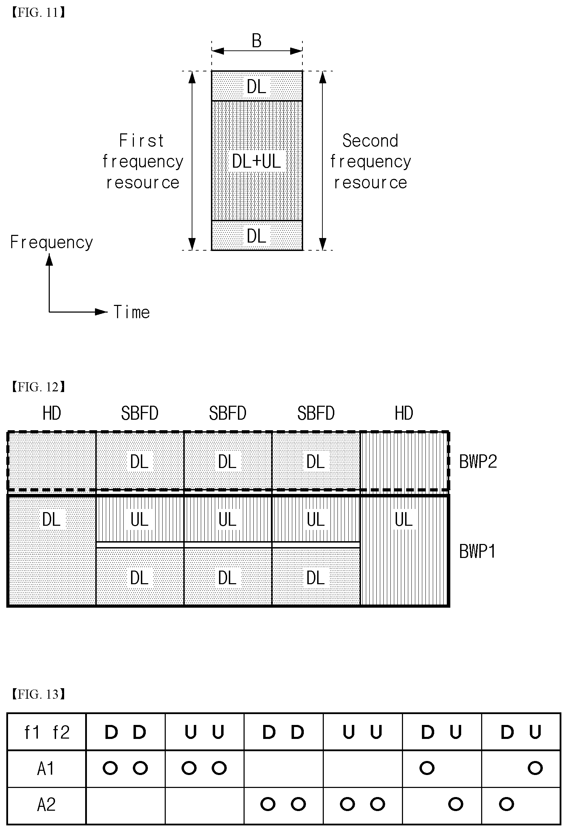

FIG. 11 illustrates an example of a structure in which a resource operating in half duplex (HD) and a resource operating in full duplex (FD) such as SB-FD or SS-FD coexist in a system applicable to the present disclosure.

In the present disclosure, it is assumed that a cell (gNB) performs both DL transmission and UL reception in the same time resource in an FD scheme such as SB-FD or SS-FD. More specifically, it is assumed that the cell performs a HD operation in a first time resource and performs a FD operation in a second time resource (which may be a remaining time resource except for the first time resource).

In the first time resource performing the HD operation, a DL operation or a UL operation is performed in all frequency resources constituting an entire system bandwidth. In the first time resource performing the HD operation, the network performs the DL operation through a 1-1 time resource and the UL operation through a 1-2 time resource. In this instance, the 1-1 time resource and the 1-2 time resource do not overlap each other.

In the second time resource performing the FD operation, the network performs the DL operation through all frequency resources or some frequency resources (first frequency resources) constituting a system bandwidth of the cell, and performs the UL operation through all the frequency resources or some frequency resources (second frequency resources).

For example, as illustrated in FIG. 8, a time resource operating in HD corresponds to the first time resource, and a time resource operating in SB-FD corresponds to the second time resource. For the first time resource, a time resource marked as DL corresponds to the 1-1 time resource, and a time resource marked as UL corresponds to the 1-2 time resource. As illustrated in FIG. 9, for the second time resource, a frequency resource operating in DL corresponds to the first frequency resource, and a frequency resource operating in UL corresponds to the second frequency resource.

For another example, as illustrated in FIG. 10, a time resource operating in HD corresponds to the first time resource, and a time resource operating in SS-FD corresponds to the second time resource. For the first time resource, a time resource marked as DL corresponds to the 1-1 time resource, and a time resource marked as UL corresponds to the 1-2 time resource. As illustrated in FIG. 11, for the second time resource, a frequency resource operating in DL corresponds to the first frequency resource, and a frequency resource operating in UL corresponds to the second frequency resource. A frequency resource marked as DL+UL is a frequency resource capable of performing both the DL operation and the UL operation and corresponds to both the first frequency resource and the second frequency resource.

More specifically, the first frequency resource and/or the second frequency resource may have all or some of the following features.

(1) When a SB-FD operation is performed, the first frequency resource and the second frequency resource do not overlap each other. This is to ensure that DL and UL resources are performed through different frequency resources. In this instance, there may be a frequency resource that does not correspond to both the first frequency resource and the second frequency resource, and the frequency resource is referred to as a guard sub-band or a guard frequency resource. The guard frequency resource may be necessary to reduce an interference of DL transmission on UL reception. The guard frequency resource may be located between the first frequency resource and the second frequency resource.

(2) When the SS-FD operation is performed, the first frequency resource and the second frequency resource may overlap each other. In this instance, there may be a frequency resource that does not correspond to both the first frequency resource and the second frequency resource, and the frequency resource is referred to as a guard sub-band or a guard frequency resource. The guard frequency resource may be necessary to reduce an interference from DL transmission in adjacent carriers to UL reception and/or to reduce an interference from DL transmission to UL reception in adjacent carriers.

(3) When the SB-FD operation is performed, the second frequency resource may include contiguous frequency resources, and the first frequency resource may include non-contiguous frequency resources. In this instance, the first frequency resource may include multiple (e.g., two) sets of contiguous frequency resources. This is to reduce an interference from DL transmission in adjacent carriers to UL resources by positioning the second frequency resource used for UL at the center of frequency resources constituting the cell. On the contrary the first frequency resource may include contiguous frequency resources, and the second frequency resource may include non-contiguous frequency resources. In this instance, the second frequency resource may include multiple (e.g., two) sets of contiguous frequency resources. This is to reduce an interference from DL transmission to UL resources in adjacent carriers by positioning the second frequency resource used for DL at the center of frequency resources constituting the cell.

(4) When the SS-FD operation is performed, the second frequency resource may include some frequency resources of the first frequency resource. In this instance, the second frequency resource may include less frequency resources as many as X PRBs for one edge portion or both edge portions than the first frequency resource. This is to reduce an interference from DL transmission in adjacent carriers to UL reception.

The network may determine/decide the 'first time resource' and the 'second time resource', and the 'first frequency resource' and the 'second frequency resource' described above, and provide all or part of the corresponding information to the UE. The network performs DL transmission to the UE in the '1-1 time resource within the first time resource' and the 'first frequency resource within the second time resource', and performs UL reception from the UE in the '1-2 time resource within the first time resource' and the 'second frequency resource within the second time resource'.

The UE may receive, from the network, all or part of information on the 'first time resource' and the 'second time resource' and the 'first frequency resource' and the 'second frequency resource' described above, and determine a location of the resources. The UE performs DL reception from the network through all or part of the '1-1 time resource within the first time resource' and the 'first frequency resource within the second time resource', and performs UL transmission to the network through the '1-2 time resource within the first time resource' and the 'second frequency resource within the second time resource'.

In a TDD carrier of the existing NR, the gNB performs only one operation of the downlink and uplink operations in a specific time resource. In this instance, the gNB always operates in downlink in a time resource in which SSB is transmitted.

For the UE operating in the existing TDD, the following is assumed for a symbol in which SSB is transmitted.

(1) A SS/PBCH transmission symbol cannot be configured with uplink by TDD configuration (by TDD-UL-DL-ConfigCommon and/or TDD-UL-DL-ConfigDedicated).

(2) The SS/PBCH transmission symbol cannot be configured with uplink by a slot format indication (SFI) by DCI format 2_0.

(3) If SS/PBCH is transmitted in a symbol configured with flexible by TDD configuration (by TDD-UL-DL-Config-Common and/or TDD-UL-DL-ConfigDedicated), when an uplink transmission of the UE overlaps the SS/PBCH symbol, the UE does not perform the uplink transmission. (If a sounding reference signal (SRS) overlaps the SS/PBCH symbol in a flexible symbol, the UE does not perform an SRS transmission in the overlapped symbol(s))

In an FDR environment such as SB-FD and SS-FD, both DL and UL resources may exist in the same time resource from a cell perspective. Thus, the gNB may perform an uplink reception while performing a downlink transmission.

Therefore, even if the SS/PBCH is transmitted in a time resource in which the cell performs an FDR operation, the gNB may perform the uplink reception while transmitting SS/PBCH.

According to the current standard specification, the UE cannot perform the uplink transmission in a symbol resource in which the SS/PBCH is transmitted. In this case, the FDR operation cannot be performed in the SS/PBCH transmission time resource.

## TDD Configuration

In an existing spectrum performing TDD, a base station and a UE assumed a half duplex (HD) operation, and communication between the base station and the UE is characterized by separating the time so that a time resource for performing downlink, in which signals are transmitted from the base station to the UE and are received by the UE, and a time resource for performing uplink, in which signals are transmitted from the UE to the base station and are received by the base station do not overlap each other. (or a transmission time and a reception time of the UE are separated even in a sidelink performing direct communication between the UEs) If half duplex is supported in the spectrum performing TDD as above, the base station and the UE may use all frequency resources to be used at a specific time in downlink or uplink. By determining which time resource will be used for downlink or uplink and indicating this information to the UE, the UE may perform operations by determining that the UE will receive the downlink signals in some time resources and transmit the uplink signals in other times. To this end, in the LTE system, a special slot(S) is defined so that all OFDM symbols for a specific time (1ms) in units of the specific time are used in downlink (D) or uplink (U); or some of the OFDM symbols included in the specific time are used in DL, other OFDM symbols are used in UL, and remaining OFDM symbols are used in a gap time. The base station is designed to determine D or S or U in a specific time range, configure the TDD configuration based on this, and indicate it to the UE. For example, the base station may indicate that it is configured as DDDSU in the range of 5ms. The TDD configuration thus indicated is characterized by being commonly applied to all UEs belonging to a cell. In the NR system, the TDD configuration may be configured by specifying locations of a downlink slot and a downlink OFDM symbol, or a flexible slot and a flexible OFDM symbol, or an uplink slot and an uplink OFDM symbol in a specific time duration, and may be indicated to the UE. The indication of the configuration described above may be distinguished based on a cell specific TDD configuration indicated via system information, a UE specific TDD configuration indicated via UE Specific RRC signaling, and an indicator commonly indicated to a UE group.

Recently, 3GPP is studying subband full duplex (SBFD), which allows simultaneous transmission and reception of DL and UL at the base station end by dividing the frequency on a per subband basis in a single carrier. In the SBFD, the existing half duplex is characterized by enabling transmission and reception in the opposite direction (downlink and uplink) by distinguishing the frequency in a time duration used for downlink only or uplink only. (Performing transmission and reception in opposite directions (downlink and uplink, or sidelink in both directions) by overlapping frequencies may also be called the full duplex operation. The present disclosure assumes that it can be applied to various full duplex operations, not limited to SB-FD.)

In this instance, it may be assumed that the base station operates in the full Duplex and the UE operates in the half duplex. In an initial access process, the UE obtains an initial synchronization from a synchronization signal and obtains most basic information of the base station from PBCH, and then monitors PDCCH so as to obtain system information and obtains the system information through the PDSCH. The system information includes the TDD configuration, that the UEs commonly use in the cell. When the base station performs the full duplex operation, the system information may include information related to the full duplex operation and may be indicated to the UE.

For example, the system information may include:

   (1) information informing time resources in which full duplex is performed; and
   (2) frequency resource information for each of downlink and uplink when full duplex is performed.

The advantage of the SB-FD is that it allows the base station to use DL resources and UL resources more flexibly in frequency units. When DL traffic is relatively low, more UL resources can be specified and used, and when UL coverage enhancement is required, more UL resources can be specified and used.

However, if only the TDD configuration included in the existing system information is used, it may be difficult to use the advantage of the SB-FD that intends to use more UL resources.

For example, it may be assumed that the TDD configuration is operated so that DL occupies more time, in the same manner as the existing DDDSU, and some time resources of D allow the full duplex operation and are specified as time resources in which the full duplex operation is allowed. In this case, a UE performing the half duplex operation in the time resources allowing the full duplex operation can perform both downlink operation and uplink operation, but if the existing TDD configuration is followed to determine which link to operate on, the operation will clearly be determined as downlink only.

**MIMO operation**

In full duplex, self-interference, where a transmission end signal is received with a large amount of interference, may be a problem. To solve the problem, various forms of self-interference rejection/cancellation methods may be used. Among the methods, there is a method of performing transmission and reception by separating a transmit antenna and a receive antenna. As a similar method, there is a method of reducing an amount of self-interference by configuring a beam generated from a transmit antenna and a beam generated from a receive antenna to be orthogonal to each other.

**Problem 1**

In the existing TDD half duplex, when performing DL and UL, a transmit antenna and a receive antenna may be shared. In this case, spatial channels of DL and UL may be assumed to be reciprocal. Using this feature, when a UE transmits SRS in UL, a base station may receive the SRS and select a transmission precoder of the DL. Compared to a method in which the base station selects the DL transmission precoder based on information reported by the UE about PMI selected using CSI-RS in DL, this can guarantee good performance. However, in the case of separating antennas for transmission and reception in order to reduce self-interference in full duplex, it is difficult to assume the reciprocity of DL and UL channels. In addition, because SBFD performs transmission and reception by dividing the frequency for DL and UL, it is difficult to assume channel reciprocity even if the transmit and receive antennas are shared. In this case, a new method is required to select the DL precoder, either by using DL CSI-RS or by using SRS.

**Problem 2**

The number of transmit and receive antennas for TDD half duplex transmission and reception may be different the number of transmit and receive antennas for full duplex transmission and reception. For example, the number of antennas used in TDD half duplex is N, and each of transmission and reception in full duplex may be performed using a smaller number of antennas (e.g., N/2). In this case, in the DL, a type of CSI-RS port or precoder used for transmission and the maximum number of transmittable ranks may vary. Also, a width of a transmit beam generated by the base station may vary, and the number of beams may also vary. In the case of reception by the base station, the number of transmit and receive antennas used for half duplex may be different the number of transmit and receive antennas used while performing full duplex.

**Problem 3**

In half duplex, a base station may transmit signals using a wide band. However, when the base station performs the full duplex operation by dividing the frequency or sharing the frequency to perform DL and UL transmission, the base station may apply a different value from a power density that has been previously used for each RE. For example, when transmitting a signal at N dBm in a transmission bandwidth of W MHz, if some of the bands are used in DL and the transmission power is maintained at N dBm, the transmission power that can be used for each unit frequency may be much more than when a wide bandwidth is used. In this case, the signal quality for each unit frequency is different from before, and it is preferable for the UE to select an appropriate transmission rank, MCS, etc. by measuring and reporting the signal quality when the transmission power quality changes.

**CLI Measurement and Report**

In a method of measuring UE-to-UE CLI between cells in dynamic TDD, it was assumed that a victim UE receives and measures a signal of an aggressor UE in a process of receiving DL in an active BWP. However, when a base station performs the full duplex operation, particularly, when the base station operates in the full duplex and the UE operates in half duplex by dividing the frequency, cross-link interference may occur between UEs within a cell. When a specific UE receives a DL signal and other UE transmits a UL signal at the same time, a uplink (UL) transmit (Tx) signal as an interference signal is transmitted to the other UE. In particular, when performing SB-FD, a signal transmitted by a certain UE at a certain frequency acts as inter-subband interference that another UE receives at a different frequency. Because the interference signal is a signal that is transmitted by the UE and flows into an adjacent band, it is difficult to grasp the characteristics of the channel or signal. Therefore, there is a disadvantage in that it is difficult to distinguish the user who generates the interference. A method for facilitating SRS-RSRP measurement and CLI-RSSI measurement is required.

Additional advantages, objects and features of the present disclosure will be set forth in part in the following description, and in part will become apparent to those skilled in the art by examination of the following, or may be learned from the practice of the present disclosure. The objects and other advantages of the present disclosure may be realized and attained by the structure particularly pointed out in the written description and claims as well as the accompanying drawings.

**Detailed Description of the Invention**

The configuration, operation and other features of the present disclosure will be understood based on embodiments of the present disclosure described with reference to the accompanying drawings.

FIG. 12 illustrates an example of a structure in which a resource operating in half duplex (HD) and a resource operating in full duplex (FD) such as SB-FD or SS-FD coexist in a system applicable to the present disclosure.

The present disclosure is described assuming an SB-FD operation where a cell simultaneously performs DL and UL using different frequency resources (sub-band) in the same time resource. However, the present disclosure can also be applied to when the cell performs an SS-FD operation.

When the cell operates in SBFD, there may be frequency resources (i.e., DL subband and/or guard subband) that cannot be used for UL operation within UL BWP resources in which the UE operates. For example, in FIG. 12, BWP1 includes only DL or UL frequency resources in a HD slot, but DL frequency resources and UL frequency resources coexist in an SBFD slot.

The existing TDD may allow an SBFD operation to be performed in a portion (e.g., some of DL resources or all or some of time resources indicated with flexible) of a time duration including DL or UL frequency resources. In the time duration in which the SBFD operation is allowed, the frequency resources may consider DL and UL frequency resources and UL frequency resources as DL subbands and UL subbands, respectively.

As illustrated in FIG. 12, BWP2 may designate frequency resources to operate in DL or UL. In this case, only DL or UL operation is possible as in the existing TDD. On the other hand, BWP1 is characterized by including a time duration for DL only, or a time duration for UL only, or a time duration in which DL subband and UL subband can be performed simultaneously. Here, some or all of the time resources for DL only/UL only/SBFD (DL subband + UL subband) may be included in the BWP1.

A configuration configuring the UL subband and DL subband or a guard band may be indicated from the base station to the UE via a higher layer signal (e.g., system information, RRC signaling). If guard band information is indicated, the DL subband may be inferred through the guard band and UL subband information.

For example, a DL BWP and a UL BWP may include an indicator indicating the existing BW. In addition, an indicator indicating a BW of a subband may be added, and a common area of the DL subband/UL subband indicator indicated via the higher layer signal and the existing BW indicator may be determined as a DL subband/UL subband area of the DL BWP and the UL BWP. As above, a specific BWP may include two frequency bandwidths.

As in the BWP1 of FIG. 12, the UL subband of the UL BWP may exist in a region that is distinct from the DL subband of the DL BWP. In other words, the UL BWP having the UL subband may exist outside the DL BWP having the DL subband of the BWP1. As above, the DL BWP with the DL subband and the UL BWP with the UL subband may form a BWP pair.

As in the BWP2 of FIG. 12, the DL BWP/UL BWP may exist, and the BWP1 may exist in an adjacent band. The UL subband of the BWP1 may exist at a frequency adjacent to or somewhat distant from a DL region of the DL BWP2.

If the UE that can recognize the SBFD operation of the base station is specified with a subband configuration for the SBFD operation and a time resource for the SBFD operation, the base station may recognize that the UE performs the SBFD operation in a specific time resource, and may operate considering that configuration of information (e.g., frequency resource allocation, UE Tx power control, gNB Tx power, UE Tx timing, SRS/PUCCH/PUSCH, frequency hopping, CSI-RS configuration, CSI reporting, MIMO configuration, BWP, CG PUSCH, PUSCH repetition, RACH occasion, etc.) additionally indicated for the SBFD operation is used in the specific time resource.

### Embodiment 1: TDD resource configuration method for Full Duplex support and transceiver operation

Proposal 1-1. In addition to the existing cell specific TDD configuration (TDD UL/DL configuration common), a new cell specific TDD configuration that can be interpreted by UEs with a new capability is additionally indicated.

Legacy UE existing TDD configuration may be used.

A UE with a new capability in which the UE recognizes that a base station performs a FD operation and can use time/frequency/space resources based on the FD operation may follow the existing TDD configuration or follow a new TDD configuration. To this end, the base station may allow the UE to select the TDD configuration or indicate the UEs to use a specific TDD configuration.

(1) In case of allowing the UE to select, it is necessary to report to the base station which TDD configuration the UE selects. To this end, the base station may allocate a separate RACH resource. The UE that selects the RACH resource and performs a RACH procedure may be regarded as having selected a new TDD configuration, and then may perform the new TDD configuration and the RACH procedure in half duplex frequency resources and time/frequency resources indicated for full duplex in PDCCH monitoring and msg2 PDSCH, msg3 PUSCH, and msg4 PDSCH-PUCCH. Thereafter, an operation in an initial BWP may also be performed in the method described above.

(2) The UE may be indicated to use a specific TDD configuration. The UE may be indicated to use which of the existing TDD configuration and the new TDD configuration. For example, the TDD configuration may be specified for each BWP.

(3) In the case of forcing the UE to use only a specific TDD configuration, if the specific TDD configuration is indicated to or selected by the UE, the UE may operate only in the specific TDD configuration regardless of the BWP. Even if the TDD configuration is specified for each BWP, when the TDD configuration to be used in the BWP is not indicated, the TDD configuration to be used may be determined by default.

If a new cell specific TDD configuration is indicated, a method of updating it may be as follows.

(1) If a new cell specific TDD configuration is indicated, when the TDD configuration is updated with UE specific TDD configuration or SFI, an indicator may be included indicating whether to update the existing TDD configuration (that of the previous release) or update the new TDD configuration.
(2) Alternatively, if the new cell specific TDD configuration is indicated, the TDD configuration may be updated based on the new UE specific TDD configuration.

A method of configuring a new cell specific TDD configuration may be as follows.

(1) A new cell specific TDD configuration may be independently indicated. A duration of the configuration may be different from the existing one. If the duration is not given, it may be the same as a duration of an existing cell specific TDD configuration.
(2) The new cell specific TDD configuration may indicate whether downlink or uplink is available for specified time resources in which a full duplex operation is possible within the existing TDD configuration. Alternatively, the new cell specific TDD configuration may specify D, F, and U separately from the existing TDD configuration.
(3) If a reference SCS for the new cell specific TDD configuration is not given, the reference SCS may follow a reference SCS of the existing cell specific TDD configuration.

The base station may indicate, to the UE, time resources in which the base station can perform the SBFD operation. If the base station indicates, to the UE, time resources in which the base station can perform the SBFD operation, the UE may consider that the base station performs the SBFD operation and may perform DL reception or UL transmission in the subband DL/subband UL regions, respectively. An indicator of the time resource in which the base station can perform the SBFD operation may be transmitted to the UE as a cell specific configuration, and may be specifically transmitted via higher layer signaling including system information. For example, the indicator of the time resource in which the base station can perform the SBFD operation may be transmitted via a UE RRC signal.

The system information may include a cell specific TDD configuration. In the cell specific TDD configuration, the SBFD operation may be indicated in time resources indicated with DL or flexible. In UL time resources, the UE was previously configured to transmit at lower power than the base station. However, if the base station performs DL transmission at high power in the UL time resources, there is a possibility that an interference signal with significantly high power may be generated in adjacent cells. Therefore, it is not preferable to be indicated to perform the SBFD operation in the UL time resources.

If the base station is indicated to perform the SBFD operation in some or all resources of the DL or flexible region in the existing TDD configuration, it may be assumed that the UE can perform DL reception or UL transmission in time resources in which the SBFD operation of the base station is indicated. In the existing, because the base station in the half duplex performs the DL transmission in a DL region in the TDD configuration, the UE has expected the DL reception. However, the UE can perform the UL transmission as well as the DL reception in the time resources in which the base station is indicated to perform the SBFD operation.

In the flexible region, the UE can basically perform the DL reception, but the UE can also perform the UL transmission based on the indication of the base station. Based on an indicator that may be indicated as a DL or UL resource in the flexible resource, the UE can perform DL reception or UL transmission. If the base station is indicated to perform the SBFD operation in the flexible region, in the time resources in which the base station performs the SBFD operation, the UE expects to perform at least subband UL transmission and can also perform wideband UL transmission. However, if the base station has been indicated to perform the SBFD operation in the flexible region and UL is specified thereafter by a configuration such as a UE RRC signal or SFI, the UE may assume that the base station performs the existing half duplex UL reception or may assume that the base station performs the existing half duplex wideband UL transmission. In addition, the UE may not expect that the base station performs the full duplex subband UL reception operation, or the UE may not expect that the base station performs the subband UL transmission operation. The UE may expect that the base station does not perform full duplex subband UL reception operation, or the UE may expect that the base station does not perform subband UL transmission operation.

If a time resource in which the base station can perform the full duplex operation is indicated to the UE, and a RACH configuration that enables RACH transmission through the time resource in which the base station can perform the full duplex operation is indicated to the UE, the UE may perform the RACH transmission in a UL frequency domain of Full Duplex. If an indicator of a time domain in which the base station can perform the full duplex operation is transmitted to the UE in addition to the existing TDD configuration, if no additional TDD configuration is indicated, the UE may selectively perform DL reception or UL transmission in the time domain in which the base station can perform the full duplex operation. For example, if the UE performs the RACH transmission, the UE may perform the RACH transmission using a RACH occasion defined in a UL frequency resource included in a full duplex time resource that is after at least several symbols after the DL reception. If the UE transmits a RACH in the UL frequency resource included in the full duplex time resource, the UE may perform a RACH preamble retransmission through RACH occasions specified in the RACH configuration.

If the base station indicates, to the UE, a time resource in which the base station performs the full duplex operation, and the UE performs a RACH operation in the time resource in which the base station performs the full duplex operation, RACH occasion information or PDCCH monitoring for msg2 RAR reception and whether to designate PDSCH frequency resource (DL subband of SBFD slot, DL frequency resource of non-SBFD) or a frequency duration for msg3 PUSCH transmission (UL subband of SBFD slot, UL frequency resource of non-SBFD) or frequency resources for PDCCH monitoring and msg4 PDSCH reception, a frequency location for PUCCH transmission for msg4 PDSCH, or PUCCH resource, etc. may be indicated to the UE.

Alternatively, some preambles among existing RACH occasions may be indicated to a UE that knows and can perform the full duplex operation of the base station, and the base station may allow transmission of the RACH preamble to the UE.

If the UE transmits a RACH preamble using a RACH occasion specified in a full duplex time resource or transmits a RACH preamble by designating some preambles of an existing RACH occasion, the UE may perform PDCCH monitoring for reception of RAR in a time resource capable of full duplex or a time resource capable of half duplex of the base station. If a time resource for msg3 PUSCH transmission is specified in a RAR message, in a method in which the base station indicates, to the UE, a UL hopping or UL transmission frequency resource location in a time resource in which the base station can perform the SBFD operation based on a location of the time resource, the UE may follow an indicator for full duplex, and the UE may interpret and transmit by following the existing indicator in a non-SBFD time resource. For Msg4 PDSCH, for PUCCH transmission for Msg4 PDSCH, based on whether the base station can perform the full duplex or half duplex operation, the UE may perform reception and transmission suitable for the time resource by considering frequency domain/antenna information/UL hopping and additional information related to full duplex.

FIG. 13 illustrates an example of information indicating a downlink resource and an uplink resource based on antenna configuration in a system applicable to the present disclosure.

## Embodiment 2: MIMO technology for Half Duplex and Full Duplex support and transceiver operation

When a base station performs full duplex (SBFD or SSFD), the base station may use an antenna dedicated to each link direction to simultaneously perform DL transmission and UL reception. For this purpose, at least two separate antennas or antenna sets or panels may be used. At a specific time, only DL transmission or only UL reception may be performed. In this instance, the base station may use some antennas or antenna sets or panels among the at least two separate antennas or antenna sets or panels. Alternatively, the base station may perform transmission or reception using all the antennas or antenna sets or panels. Alternatively, the base station may simultaneously perform DL/UL using the same antenna. If a UE supports a full duplex operation, separate antennas may be used for DL reception and UL transmission, or DL reception and UL transmission may be performed using one antenna.

The base station supporting the full duplex operation informs the UE, which knows whether the base station can perform the full duplex operation, of whether the base station can perform the full duplex operation via a higher layer signal (e.g., system information, RRC signal, etc.). If the base station informs the UE of whether the base station can perform the full duplex operation, additional information used for the full duplex operation may be transmitted to the UE. For example, CSI-RS configuration, SRS configuration, frequency hopping, MIMO configuration (number of antenna, codebook, etc.), DL Tx power information, etc. may be additionally indicated to the UE. In the case of a user in RRC CONNECTED state, each information may be additionally indicated in a configuration including configuration such as DL/UL.

The base station may transmit time information for performing the full duplex operation to the UE. The UE that receives the time information for performing the full duplex operation may determine that the base station will perform the full duplex operation in the indicated time resource and may receive a DL signal or transmit a UL signal using the time information for performing the full duplex operation.

Proposal 2-1. DL signal and UL SRS transmission resource

The base station separately indicates, to the UE, information on a signal to be received or information on a signal to be transmitted in a specific time duration (e.g., a time duration in which half duplex is possible or a time duration in which full duplex is possible). Or, the base station indicates information configuring a DL signal or UL SRS used only in the half duplex time duration; or a DL signal and/or a UL signal used in the half duplex time duration and the full duplex time duration; or a DL signal and/or a UL signal used in the full duplex time duration, or the like.

The base station designates a source of a TCI-state among candidate reference signals available in the half duplex time duration in the half duplex, and designates a source of a TCI-state among candidate reference signals available in the full duplex time duration in the full duplex.

FIG. 13 illustrates an example where, for SBFD in which frequency resources are divided (F1, F2) and are used for DL and UL purposes respectively, in a state where (F1, F2) is (D D) when the frequency resources are used for DL only, (F1, F2) is (U U) when the frequency resources are used for UL only, and (F1, F2) is (D U) or (U D) when the frequency resources are separately used for DL and UL, each of multiple antennas (A1, A2) is used per frequency and per direction.

The information of FIG. 13 indicates, for example, performing one of the following operations:

(Operation 1) DL only (D D) in all F1 and F2 via Antenna 1 (A1)

(Operation 2) UL only (U U) in all F1 and F2 via Antenna 1 (A1)

(Operation 3) DL only (D D) in all F1 and F2 via Antenna 2 (A2)

(Operation 4) UL only (U U) in all F1 and F2 via Antenna 2 (A2)

(Operation 5) DL in F1 via Antenna 1 (A1) and UL in F2 via Antenna 2 (A2)

(Operation 6) DL in F1 via Antenna 2 (A2) and UL in F2 via Antenna 1 (A1)

When the base station uses only the Antenna 1 as in (Operation 1) and (Operation 2) while performing the half duplex, or when the base station performs F1 DL using the Antenna 1 and F2 UL using the Antenna 2 as in (Operation 5) while performing the full duplex, DL of Antenna 1 and F1 of (Operation 5) in the full duplex may assume the reciprocity of the channel with UL of Antenna 1 and F1 of (Operation 2) in the half duplex.

On the other hand, it is difficult that UL of Antenna 2 and F2 of (Operation 5) in the full duplex assumes the reciprocity with any DL in (Operation 1) and (Operation 2).

An advantage in TDD is that it obtains spatial information from the signal received in UL by utilizing the reciprocity characteristics of the DL channel and the UL channel and calculates and applies a beamforming weight of DL transmission. However, in this case, it becomes difficult to use DL transmission using the signal of A2 UL in (Operation 5) in full duplex.

Another advantage in TDD is that the UE can find a receive (Rx) beam suitable for DL reception while receiving a DL signal and can use the receive beam as a UL transmission beam using the reciprocity characteristics of DL and UL. A reference signal, which is the basis for DL reception, may be SSB/PBCH or CSI-RS, and when SRS is transmitted using the Rx beam of the UE acquired based on the reference signal, Tx beam information used in the SRS may be used to transmit another UL signal. However, when the UE transmits UL in F2 of (Operation 5) in full duplex, it is difficult for the UE to assume the reciprocity between the DL signal and the UL signal because the base station antenna A2 for receiving UL and the antenna A1 for transmitting DL are different from each other.

DL only or UL only has been described above using one of the antennas A1 and A2. However, when both the antennas A1 and A2 are used for DL only transmission and UL only reception, there are cases where it is difficult to establish the reciprocity even when either A1 or A2 is used for each of DL and UL. As a method to solve this problem, if DL only or UL only is performed using a specific antenna in half duplex, (1) A1 DL only transmission UL only reception, and (2) A2 DL only transmission UL only reception may be performed, and in full duplex, (3) A1 DL transmission and A2 UL reception and (4) A1 UL reception and A2 DL transmission may all be performed. Through this, Full Duplex A2 UL reception can be performed in Half Duplex A2 DL only transmission, and reciprocity can be guaranteed between the two. The same applies to other cases. For this operation, the base station needs to inform the UE of information on a mapping relationship between source resources of the TCI-state and a specific SRS.

Proposal 2-2. TCI state or SRI indication

When there are multiple TCI states or SRIs, the base station configures a TCI state or SRI to be used in a time resource capable of full duplex and indicates it to the UE. In particular, when transmission and reception are indicated through a single resource indicator such as repetition transmission or configured grant and are performed over multiple times, information on the TCI state or the SRI, etc. used in a time resource capable of half duplex and the time resource capable of full duplex are configured and indicated to the UE, and the UE performs transmission and reception based on the information.

Proposal 2-3. Antenna configuration

The base station additionally indicates an antenna configuration or a configuration related to MIMO, as in the embodiment of FIG. 13. The additionally indicated configuration may be specified in which time resource it is used. Or, if there is an indicator indicating that it is a time resource capable of full duplex, the UE assumes that it can be used in the time resource specified according to the indicator.

Proposal 2-4. DL Power

The base station indicates, to the UE, a value of DL power in a time resource in which SBFD is used. An indication of the DL power may be indicated in various methods. For example, it may indicate how much power difference there is compared to transmission power of a specific signal (e.g., SSB or CSI-RS).

However, as above, when the base station indicates additional information related to DL transmission to the UE, it may be assumed that the value of DL power is used in a frequency resource for DL in a time resource indicated to be applied to SB-FD.

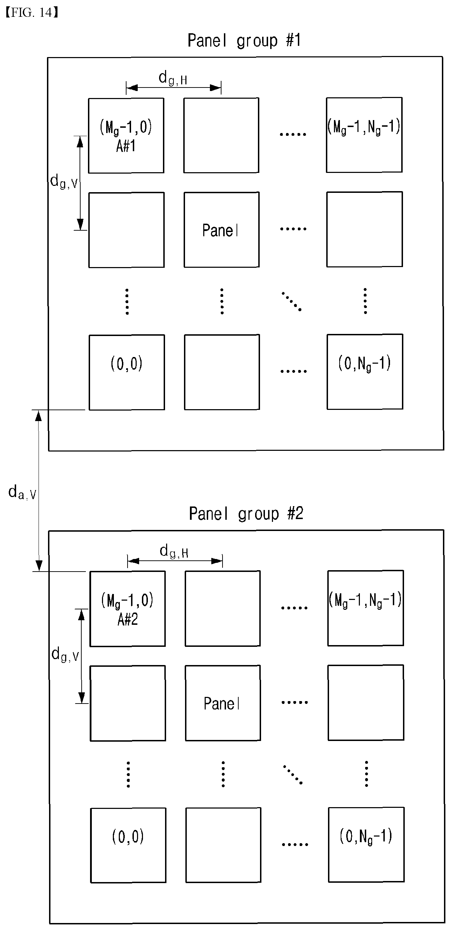

FIG. 14 illustrates an example of a separate-Tx/Rx antenna array model in a system applicable to the present disclosure.

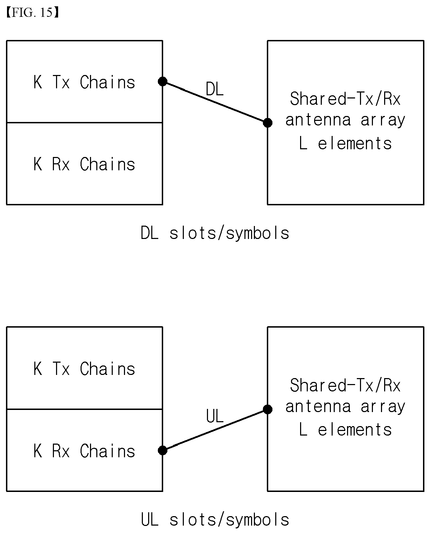

FIG. 15 illustrates an example of (a) legacy TDD with shared-Tx/Rx antenna array in a system applicable to the present disclosure.

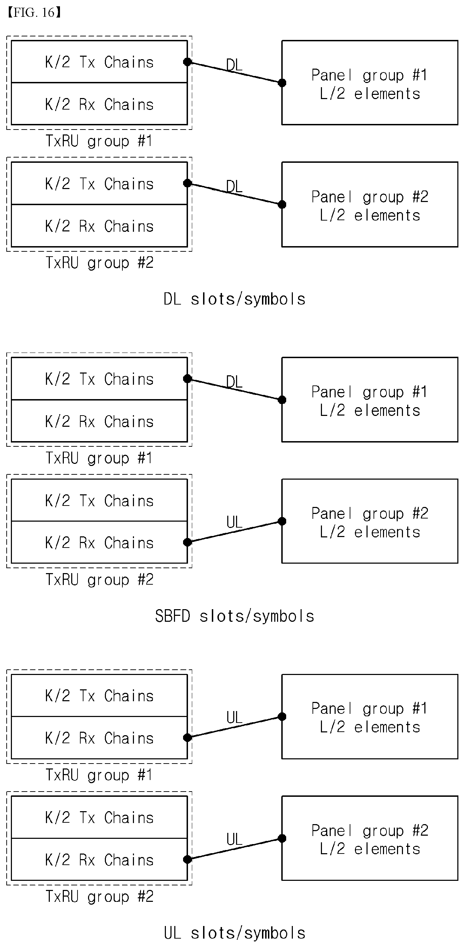

FIG. 16 illustrates an example of (b) SBFD antenna configuration Option-1 (Method 1) in a system applicable to the present disclosure.

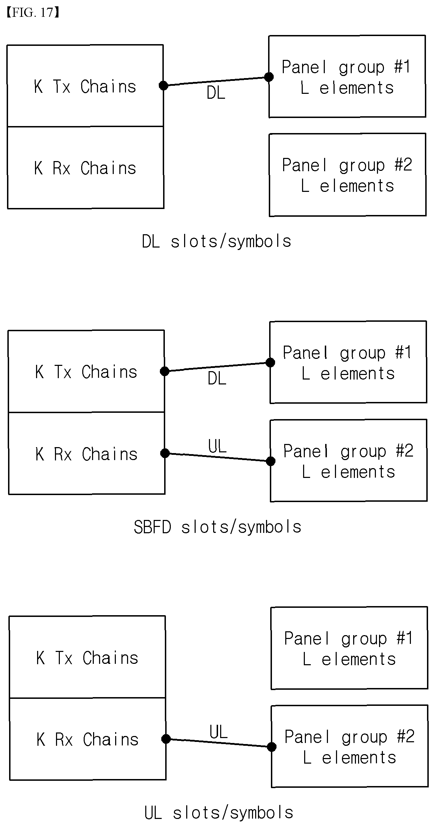

FIG. 17 illustrates an example of (c) SBFD antenna configuration Option-2 (Method 2-1) in a system applicable to the present disclosure.

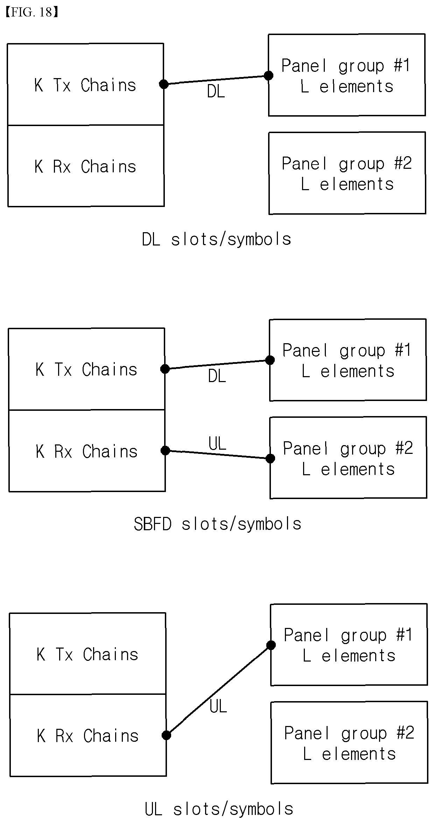

FIG. 18 illustrates an example of (d) SBFD antenna configuration Option-2 (Method 2-2) in a system applicable to the present disclosure.

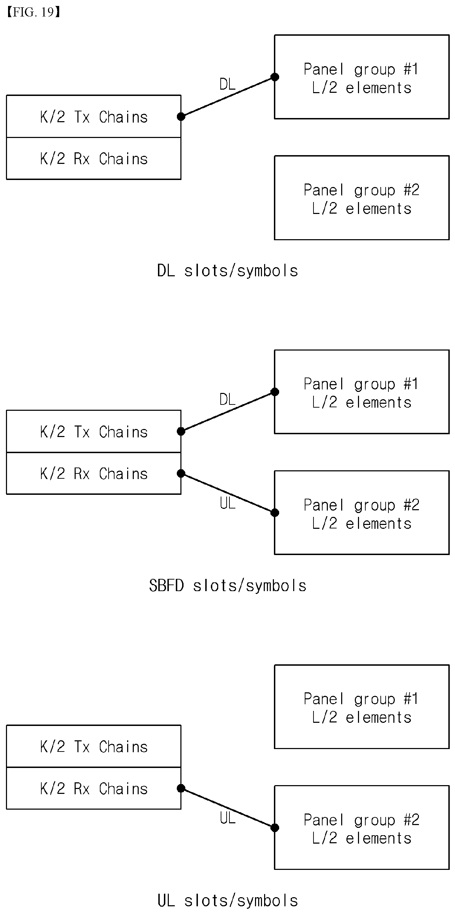

FIG. 19 illustrates an example of (e) SBFD antenna configuration Option-3 (Method 3-1) in a system applicable to the present disclosure.

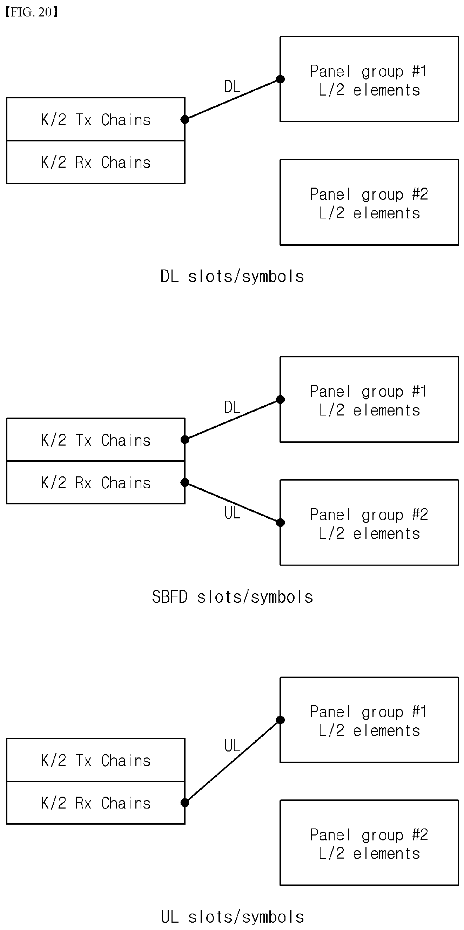

FIG. 20 illustrates an example of (f) SBFD antenna configuration Option-3 (Method 3-2) in a system applicable to the present disclosure.

FIGS. 15 to 20 illustrate examples of antenna configuration of legacy TDD and SBFD.

The following is part of 3GPP TR38.858 v1.0.0 (September 2023).

TR38.858 v1.0.0

**6.1.2 Impact and potential enhancements for transmissions and receptions**

Impact and potential enhancements for UL transmissions and DL receptions across SBFD symbols and non-SBFD symbols, including at least the following, are studied:

- PDCCH, scheduled/configured PUCCH/PUSCH/PDSCH, without repetition in SBFD symbols and non-SBFD symbols
- Scheduled/configured SRS/CSI-RS in SBFD symbols and non-SBFD symbols
- Scheduled/configured TBoMS across SBFD symbols and non-SBFD symbols with or without repetition
- Multi-PUSCH/PDSCH scheduled by a single DCI in SBFD symbols and non-SBFD symbols
- Scheduled/configured PDSCH/PUSCH/PUCCH with repetitions across SBFD symbols and non-SBFD symbols

Note: Inter-slot/intra-slot/inter-repetition/inter-group frequency hopping with DMRS bundling of PUSCH/-PUCCH, if applicable, is considered.

Examples of potential enhancements include:

- Resource allocation in frequency domain including frequency hopping
- Resource allocation in time domain
- Power domain
- Spatial domain

RAN1 studied the impact and benefits of potential enhancements to resource allocation in frequency-domain for SBFD operation, considering unaligned boundaries between resource block group(s)/reporting subband(s) and SBFD subbands, including at least the following:

- RBG for PDSCH RA type 0
- CSI reporting configuration
- CSI-RS resource configuration
- PRG of PDSCH

For resource allocation in frequency-domain in case of unaligned boundaries between RBG and SBFD subbands, RAN1 studied whether or not the part of the DL RBG inside/outside the DL subband and the part of the UL RBG inside/outside the UL subband can be used. It is agreed that for SBFD-aware UEs, the part of the DL RBG inside the DL subband can be used and the part of the UL RBG inside the UL subband can be used for better resource utilization. It is agreed that the part of the RBG outside the DL subband cannot be used for DL reception and the part of the RBG outside the UL subband cannot be used for UL transmission at least for semi-static SBFD.

For semi-static SBFD, for a CSI reporting subband which overlaps with SBFD subband boundaries, it is agreed that CSI report is derived based on CSI-RS resources excluding CSI-RS resources outside DL subband(s) for SBFD-aware UE.

For semi-static SBFD, for a CSI-RS resource which overlaps with SBFD subband boundaries, it is agreed that only CSI-RS resources within DL subband(s) are valid for SBFD-aware UE.

For SBFD-aware UEs, at least the following issues for PDSCH are studied:

PRG(s) with size of 2 and 4 that overlaps with subband boundary
Wideband precoder in case of non-contiguous DL subbands

For a PRG that overlaps with subband boundary, if the part of DL PRG inside the DL subband can be used, better scheduling flexibility and resource utilization can be achieved, however degraded channel estimation quality in the partial PRG is expected compared to a PRG due to limited RBs in the partial PRG. It is noted that UE complexity could increase if this feature is supported.

If PRG is determined as wideband, the following two options are studied.

Option 1: non-contiguous frequency resources across two DL subbands but contiguous frequency resource within each DL subband can be allocated

Option 2: non-contiguous frequency resources across two DL subbands cannot be allocated

It is agreed that Option 1 can achieve better scheduling flexibility and higher DL data rate. Compared with Option 2, Option 1 requires UE to handle two non-contiguous segments of contiguous RBs that may increase UE complexity for channel estimation.

Frequency resource allocation for CSI-RS across downlink subbands for SBFD-aware UEs are studied considering the following options:

- Option 1: Two contiguous CSI-RS resources that are linked
- Option 2: One CSI-RS resource
- Option 2-1: Non-contiguous CSI-RS resource allocation
- Option 2-2: One contiguous CSI-RS resource allocation with non-contiguous CSI-RS resource derived by excluding frequency resources outside DL subband (s)

For all the options, there is no impact on CSI-RS sequence generation. Option 1 requires additional signalling to link two CSI-RS resources in two DL subbands. Option 2-1 requires new RRC structure to configure non-contiguous RBs for one CSI-RS resource, which may require additional signalling overhead. Option 2-2 can reuse the existing signalling design for CSI-RS resource configuration. Option 2-2 can be used to resolve the potential unaligned boundaries between CSI-RS resource configuration and SBFD subbands. Further discussion is required on the UE complexity due to UE capability of maximum number of configured CSI-RS resources and/or processing non-contiguous CSI-RS.

For UL transmissions and DL receptions across SBFD symbols and non-SBFD symbols in different slots (each transmission/reception within a slot has either all SBFD or all non-SBFD symbols), the following options are studied for SBFD-aware UEs:

- Option 1: The transmissions/receptions are restricted to SBFD symbols only or non-SBFD symbols only
- Option 2: The transmissions/receptions can be in SBFD symbols and non-SBFD symbols

UL transmissions and DL receptions across SBFD symbols and non-SBFD symbols include the following:

- PDSCH/PUSCH/PUCCH repetitions
- SPS PDSCH/CG PUSCH
- TBoMS
- Multi-PUSCH/PDSCH scheduled by a single DCI
- Periodic/semi-persistent SRS/CSI-RS/PUCCH
- PDCCH

Option 1 can be achieved by gNB configuration or scheduling to ensure that all transmission/reception occasions are confined to either SBFD symbols or non-SBFD symbols. Alternatively, Option 1 can be achieved by additional indication or rules to determine the transmission/reception occasions are valid within one symbol type and are invalid within the other symbol type. The frequency resources, power control and beam/spatial relation for all the transmission/-reception occasions can be the same for Option 1 but may be different for Option 2. If different, it may require additional specification efforts. Option 1 may or may not increase the transmission/reception latency if the transmission/reception in the other symbol type is postponed and may degrade the performance if the transmission/reception in the other symbol type is dropped. Option 2 may or may not reduce the transmission/reception latency and improve coverage.

For UL transmissions and DL receptions across SBFD symbols and non-SBFD symbols in different slots (each transmission/reception within a slot has either all SBFD or all non-SBFD symbols), if the transmissions/receptions can be in SBFD symbols and non-SBFD symbols with different available resources, at least the following frequency resource allocation options for PDSCH, CSI-RS, PUSCH, PUCCH, SRS for SBFD-aware UE are studied.

> Option 1: Separate FDRA determination for SBFD slots and non-SBFD slots.
> Option 1-1: Separate FDRA configurations/indications for SBFD slots and non-SBFD slots
> Option 1-2: Separate frequency resources determined for SBFD slots and non-SBFD slots based on single FDRA configuration/indication
> Option 1-3: single FDRA configuration/indication and RB offset(s)
> Option 2: Perform rate matching or puncturing on the RBs outside DL/UL subbands for DL/UL channels/signals.
> Option 3: A DL/UL channel/signal overlapping with RBs outside DL/UL subbands in a SBFD slot is dropped or postponed.

Note: Different options can be studied for different signals/channels.

RAN1 studied whether the transmission/reception occasion of a physical channel/signal can be mapped to SBFD and non-SBFD symbols within a slot for a UE, and whether a UE can transmit/receive in the occasion mapped to SBFD symbols and non-SBFD symbols including:

- Use-case(s) including the locations and number of transition points of the SBFD and non-SBFD symbols in the slot.
- Potential benefits if any
- Phase continuity
- Potential interruption of transmissions/receptions during transition
- Required guard time if any
- Potential impact on performance
- Impact on link adaptation, channel estimation, and other procedures
- UL transmission timing if any
- Implementation complexity
- Applicability for SBFD aware UE and non-SBFD aware UEs
- NOTE: There are more than one scenario where a transmission overlaps SBFD and non-SBFD symbols and some may or may not face the aspects listed above
- NOTE: This study doesn't mean RAN1 agreement on a slot consisting of SBFD and non-SBFD symbols.

For a physical channel/signal occasion mapped to SBFD and non-SBFD symbols within a slot if any, the following options for UE transmission/reception can be considered in the normative stage.

Option 1: UE does not transmit or receive the physical channel/signal within the slot.

Option 2: UE can transmit or receive the physical channel/signal within the slot only under certain conditions.

The conditions may depend on at least the following: whether or not phase continuity can be maintained across SBFD and non-SBFD symbols, whether or not there are same or different transmission/reception parameters e.g. power control, spatial/QCL, UL timing etc. applied in SBFD and non-SBFD symbols, and whether or not there is a guard period between the SBFD and non-SBFD symbols, etc.

Other options are not precluded.

For SBFD-aware UEs, the following options are studied for CSI report associated with periodic/semi-persistent CSI-RS, in case the periodicity is such that CSI-RS instances occur in both SBFD symbols and non-SBFD symbols in different slots (each CSI-RS resource within a slot has either all SBFD or all non-SBFD symbols):

> Option 1: two CSI-ReportConfigs, where one is associated with SBFD symbols and the other is associated with non-SBFD symbols
> Option 1-1: One CSI-ReportConfig is associated with a CSI-RS restricted to SBFD symbols only and the second CSI-ReportConfig is associated with a second CSI-RS restricted to non-SBFD symbols only;
> Option 1-2: Both CSI-ReportConfigs are associated with the same CSI-RS. The CSI report associated with one CSI-ReportConfig is derived based on CSI-RS instances in SBFD symbols only. The CSI report associated with the second CSI-ReportConfig is derived based on CSI-RS instances in non-SBFD symbols only.
> Option 2: one CSI-ReportConfig associated with both SBFD symbols and non-SBFD symbols
> Option 2-1: One CSI-ReportConfig is associated with two CSI-RSs which are restricted to SBFD symbols and non-SBFD symbols respectively. Separate CSI measurements are derived based on the first and second CSI-RSs respectively.

Option 2-2: One CSI-ReportConfig is associated with one CSI-RS. The CSI report is derived based on CSI-RS which can be in SBFD symbols or non-SBFD symbols in different time instances.

Note that whether the CSI-RS resource can be used for SBFD and non-SBFD symbols may depend on, e.g., gNB implementation of same/different antenna configuration in both symbols.

Option 1-1 can be supported according to existing specification by gNB configuration of appropriate periodicities to ensure that the CSI-RS associated with each CSI-ReportConfig is confined to either SBFD symbols or non-SBFD symbols only. But it may restrict the gNB configuration flexibility and enhancements can be considered by additional indication or rules to determine the CSI-RS is valid within one symbol type and is invalid in the other symbol type.

Option 2-2 can be supported according to existing specification to configure measurement restriction so that UE would not average CSI measurements across SBFD and non-SBFD symbols.

For SRS, PUCCH and PUSCH on SBFD symbols and non-SBFD symbols in different slots, it may be beneficial to have separate resources, FH parameters, UL power control parameters and/or beam/spatial relation.

gNB can configure a CORESET and a search space in a way such that the MOs of the search space occur in either SBFD or non-SBFD symbols, or the MOs of the search space occur in both SBFD and non-SBFD symbols but the associated CORESET does not overlap the boundary of a DL subband in SBFD symbols.

If it is agreed to be beneficial that a CORESET and a search space are configured that the MOs of the search space occur in both SBFD and non-SBFD symbols and the associated CORESET overlaps the boundary of a DL subband in SBFD symbols, at least the following options can be considered for SBFD-aware UE:

Option 1: Separate valid resources for the CORESET in SBFD symbols and in non-SBFD symbols.

Option 2: Rate matching or puncturing on the REG(s) of a PDCCH outside DL subband(s).

Option 3: UE does not monitor a PDCCH candidate if it is mapped to one or more REs that overlap with REs outside DL subband(s).

Option 4: Drop search space(s) when the associated CORESET overlaps with RBs outside DL subband(s)

Option 5: Separate search spaces associated with a CORESET in SBFD and non-SBFD symbols

Note: These options are applicable to at least USS.

7.2 Evaluation methodologies

7.2.1 System level simulation

gNB Antenna configuration

The detailed gNB antenna configurations for SBFD evaluation can be found in Annex A.5.

Annex A.5

A.5 gNB antenna configuration and transmit power for SBFD

For evaluation of legacy TDD operation, BS uses the same antenna array for downlink transmission and uplink reception, we can call it shared-Tx/Rx antenna array for description of evaluation assumption. For evaluation of SBFD operation, BS uses separate panels for simultaneous downlink transmission and uplink reception, we can call it separate-Tx/Rx antenna array for description of evaluation assumption.

The separate-Tx/Rx antenna array for description of evaluation assumption can be modelled by two panel groups as in Figure 14.

- Legacy parameters (M, N, P, $M_g$, $N_g$), ($d_H$, $d_V$) and ($d_{g,H}$, $d_{g,V}$) are used for description of each panel group:
- M: Number of vertical antenna elements within a panel, on one polarization
- N: Number of horizontal antenna elements within a panel, on one polarization
- P: Number of polarizations
- $M_g$: Number of panels in a column within a panel group.
- $N_g$: Number of panels in a row within a panel group.
- $d_{g,H}$: Antenna panel spacing in horizontal direction within a panel group.
- $d_{g,V}$: Antenna panel spacing in vertical direction within a panel group.
- Companies are to report the separation of the two panel groups. Introduce new parameters ($d_{a,H}$, $d_{a,V}$) as illustrated in the Figure 14.

- $d_{a,H}$: Panel group spacing in the horizontal direction. Typically, $d_{a,H} = 0$.
- $d_{a,V}$: Panel group spacing in the vertical direction.

For evaluation and comparison between SBFD and legacy TDD, three options can be used.

- SBFD antenna configuration option-1: The total number of antenna elements of the antenna array for SBFD is the same as the total number of antenna elements of the antenna array for legacy TDD. The total number of TxRUs of the antenna array for SBFD is the same as the total number of TxRUs of the antenna array for legacy TDD.
- SBFD antenna configuration option-2: The total number of antenna elements of the antenna array for SBFD is two times of the total number of antenna elements of the antenna array for legacy TDD. The total number of TxRUs of the antenna array for SBFD is the same as the total number of TxRUs of the antenna array for legacy TDD.
- SBFD antenna configuration option-3: The total number of antenna elements of the antenna array for SBFD is the same as the total number of antenna elements of the antenna array for legacy TDD. The total number of TxRUs of the antenna array for SBFD is half of the total number of TxRUs of the antenna array for legacy TDD.

These options are further clarified with examples in the following:
As shown in Figure 15, for legacy TDD with shared-Tx/Rx antenna array, assume the antenna configuration is $(M, N, P, M_g, N_g; M_p, N_p)$. The total number of TxRUs is $K = PM_pN_pM_gN_g$, and the total number of antenna elements is $L = PMNM_gN_g$.

For SBFD antenna configuration option-1, the separate-Tx/Rx antenna array has two panel groups, and the antenna configuration for each panel group is $(M, N, P, M_g/2, N_g)$. The total number of TXRUs is $K = PM_pN_pM_gN_g$ (same as legacy TDD), and the total number of antenna elements is $L = PMNM_gN_g$ (same as legacy TDD). One method on the usage of TXRUs and antenna elements in DL/UL/SBFD slots/symbols is illustrated as below. Other methods are not precluded and can be reported by companies.

- Method 1 (see Figure 16):

  - In DL slots, L/2 antenna elements on panel group#1 are connected to K/2 Tx chains in TxRU group#1, and L/2 antenna elements on panel group#2 are connected to K/2 Tx chains in TxRU group#2.
  - In UL slots, L/2 antenna elements on panel group#1 are connected to K/2 Rx chains in TxRU group#1, and L/2 antenna elements on panel group#2 are connected to K/2 Rx chains in TxRU group#2.
  - In SBFD slots, L/2 antenna elements on panel group#1 are connected to K/2 Tx chains in TxRU group#1, and L/2 antenna elements on panel group#2 are connected to K/2 Rx chains in TxRU group#2.

For SBFD antenna configuration option-2, the separate-Tx/Rx antenna array has two panel groups, and the antenna configuration for each panel group is $(M, N, P, M_g, N_g)$. The total number of TXRUs is $K = PM_pN_pM_gN_g$ (same as legacy TDD), and the total number of antenna elements is $2L = 2PMNM_gN_g$ (two times of that for legacy TDD). Two methods on the usage of TXRUs and antenna elements in DL/UL/SBFD slots/symbols are illustrated as below. Other methods are not precluded and can be reported by companies.

- Method 2-1 (see Figure 17):

  - In DL slots, L antenna elements on panel group#1 are connected to K Tx chains.
  - In UL slots, L antenna elements on panel group#2 are connected to K Rx chains.
  - In SBFD slots, L antenna elements on panel group#1 are connected to K Tx chains, and L antenna elements on panel group#2 are connected to K Rx chains.

- Method 2-2 (see Figure 18):

  - In DL slots, L antenna elements on panel group#1 are connected to K Tx chains.
  - In UL slots, L antenna elements on panel group#1 are connected to K Rx chains.
  - In SBFD slots, L antenna elements on panel group#1 are connected to K Tx chains, and L antenna elements on panel group#2 are connected to K Rx chains.

For SBFD antenna configuration option-3, the separate-Tx/Rx antenna array has two panel groups, and the antenna configuration for each panel group is $(M, N, P, M_g/2, N_g)$. The total number of TXRUs is $K/2 = PM_pN_pM_gN_g/2$ (half of that for legacy TDD), and the total number of antenna elements is $L = PMNM_gN_g$ (same as legacy TDD). The method on the usage of TXRUs and antenna elements in DL/UL/SBFD slots/symbols are illustrated as below. Other methods are not precluded and can be reported by companies.

- Method 3-1 (see Figure 19):

  - In DL slots, L/2 antenna elements on panel group#1 are connected to K/2 Tx chains.
  - In UL slots, L/2 antenna elements on panel group#2 are connected to K/2 Rx chains.
  - In SBFD slots, L/2 antenna elements on panel group#1 are connected to K/2 Tx chains, and L/2 antenna elements on panel group#2 are connected to K/2 Rx chains.

- Method 3-2 (see Figure 20):

  - In DL slots, L/2 antenna elements on panel group#1 are connected to K/2 Tx chains in TxRU group#1.
  - In UL slots, L/2 antenna elements on panel group#1 are connected to K/2 Rx chains in TxRU group#1.
  - In SBFD slots, L/2 antenna elements on panel group#1 are connected to K/2 Tx chains in TxRU group#1, and L/2 antenna elements on panel group#2 are connected to K/2 Rx chains in TxRU group#1.

For SBFD evaluation, assume the maximum BS transmit power is proportional to the number of Tx chains used for transmission

- For SBFD antenna configuration Option-1,
- in DL-only symbols, the maximum BS transmit power for SBFD is the same as that for legacy TDD
- in SBFD symbols, the maximum BS transmit power for SBFD is half of that for legacy TDD
- For SBFD antenna configuration Option-2, in both DL-only symbols and SBFD symbols, the maximum BS transmit power for SBFD is always the same as that for legacy TDD
- For SBFD antenna configuration Option-3, in both DL-only symbols and SBFD symbols, the maximum BS transmit power for SBFD is always half of that for legacy TDD

For BS transmit power for SBFD, take Option-1 as baseline. Option-2 can also be evaluated.

- Option-1: Power boosting is not assumed for SBFD symbols compared to DL-only symbols (as in legacy systems), i.e., BS transmit power spectrum density per Tx chain is kept the same for SBFD symbols and DL-only symbols
- Option-2: Power boosting is assumed for SBFD symbols compared to DL-only symbols, i.e.,
- DL symbols in SBFD operation have the same PSD as used in TDD DL symbols
- For SBFD symbols, its PSD is scaled according to the number of RBs in DL subband(s), e.g.,

$$\mathrm{PSD}_{\mathrm{SBFD}}^{\mathrm{Per\,Tx-chain}} = \mathrm{PSD}_{\mathrm{DL-only}}^{\mathrm{Per\,Tx-chain}} \cdot \mathrm{BW}_{\mathrm{carrier}}/\mathrm{BW}_{\mathrm{DL\,subbands}}$$

- $\mathrm{PSD}_{\mathrm{SBFD}}^{\mathrm{Per\,Tx-chain}}$ is the BS transmit power spectrum density per Tx chain in SBFD symbols
- $\mathrm{PSD}_{\mathrm{DL-only}}^{\mathrm{Per\,Tx-chain}}$ is the BS transmit power spectrum density per Tx chain in DL-only symbols
- $\mathrm{BW}_{\mathrm{carrier}}$ is the system bandwidth and $\mathrm{BW}_{\mathrm{DL\,subbands}}$ is the total bandwidth of DL subbands

### Embodiment 3: Method of measuring and reporting Intra-cell UE-to-UE CLI for Full Duplex support

In a time resource indicated to operate in SBFD, a user may transmit a UL signal in a UL subband, and another user may receive a DL signal in a DL subband. If a base station simultaneously performs DL and UL in the DL subband and the UL subband, the UL signal transmitted by the user in the UL subband may also be received by the other user in the DL subband.

If both the DL subband and the UL subband are included in the frequency band for DL only as in the BWP1 of FIG. 12, a user performing the SBFD can receive the DL signal in the DL subband, and at the same time can also receive a signal in the UL subband.

Or, as in the BWP1 and the BWP2 of FIG. 12, a user may transmit a UL signal in the UL subband of the BWP1, and another user may receive a DL signal in the DL frequency region for a DL BWP of the BWP2.

In this case, the signal transmitted in the UL subband may cause interference to a user receiving the DL signal in adjacent DL frequency ranges. This may be called intra-cell inter-subband cross link interference (CLI).

Proposal 3-1. SRS measurement band designation

If a base station allows DL reception to a UE in an SBFD available time duration, the UE may perform inter-subband UE-to-UE CLI measurement in a UL subband frequency band beyond a BW duration of a DL subband of a DL BWP if the UE has been configured with the inter-subband UE-to-UE CLI measurement in the time resource. In particular, if the UE is indicated to perform SRS-RSRP measurement, the UE receives an SRS signal of another UE at an SRS transmission frequency, at which the measurement is indicated, and measures the signal quality. In this instance, the base station may configure a measurement gap or a downlink rate-matching resource to the UE so that the UE may not receive a DL signal during an SRS signal quality measurement time duration, or may allow the UE to select reception of the DL signal or performance of SRS measurement based on a priority of a type of downlink (DL) receive (Rx) signal. The measurement gap may also be expressed as the downlink rate-matching resource.

The base station may provide the UE with information on a specific user's ID or an SRS resource ID, and may indicate an indicator informing that the SRS resource belongs to a user existing in the same cell, or may indicate a measurement resource or a resource set for measuring users existing in the same cell.

The measured value may differ from a value of inter-subband emission. When the measured value is reported, the base station may indicate correction information to the UE so that a certain value can be corrected. Or, the measured value may be reported to the base station as it is, and the base station may correct a strength of the value based on a frequency location.

The expression 'frequency band beyond a duration of DL BWP' described above may be interpreted as a UL subband of UL BWP beyond the subband of DL BWP of the BWP1 in FIG. 12 or a UL subband of UL BWP of a different frequency region distinct from the subband. Alternatively, the expression 'frequency band beyond a duration of DL BWP' described above may mean a UL subband area of UL BWP of the BWP1 beyond a DL region of DL BWP of the BWP2 in FIG. 12.

If BW of the DL BWP is wide and the BW includes both the subband of the DL BWP and the subband of the UL BWP as in the BWP1, there may be a capability capable of receiving a signal in the UL subband of the UL BWP outside the subband area of the DL BWP. Therefore, the UE may receive a signal in the subband of the UL BWP outside the subband area of the DL BWP of the BWP1 and measure the CLI. In this case, when SRS-RSRP is measured, the SRS may be received outside the subband area of the DL BWP of the BWP1, and the SRS-RSRP may be measured. If a UL signal of a user causing interference and a DL signal of the base station can be received within a specific time range, the two simultaneously received signals may be distinguished by frequency, and SRS-RSRP measurement and DL signal processing may be performed. In the case of a UE that has difficulty in simultaneous processing, or when the two signals are received outside a specific time range, one of the two actions is performed: processing the DL signal or performing UL SRS-RSRP measurement.

When the base station performs the SBFD (or SSFD) operation, intra-cell inter-UE co-channel CLI may occurs. In this case, SRS-RSRP may perform L1/L2 or L3 measurement/reporting.

Proposal 3-2. Inter-subband CLI-RSSI measurement

When inter-subband CLI measurement is performed, the base station may designate a subband for measuring CLI-RSSI to the UE, and the UE may perform measurement in this resource. When DL BWP consists of non-contiguous frequencies, the base station may configure measurement resources of the non-contiguous frequencies.

If subbands respectively belonging to non-contiguous resource frequencies are indicated using N resources, and measurements are performed at the same time within one DL BWP, the CLI-RSSI measured in each resource may be calculated as one value and reported. In this case, a reported resource ID may designate an ID of a specific resource. However, it may be interpreted that measurement information reported from the specific resource ID is identical to or representative of that measured from another resource based on an agreement between the base station and the UE, or an indication of the base station, or a recommendation of the UE.

Unlike the SRS-RSRP measurement described above, an interference signal received in the DL region using RSSI may be measured and reported.

The following is part of 3GPP TR38.858 v1.0.0 (September 2023).

TR38.858 v1.0.0 (2023.9)

6.2 Inter-UE CLI handling schemes specific for SBFD

For inter-UE inter-subband CLI measurement, at least the following methods are studied:

- Method#1: victim UE measures RSSI within DL subband

- Method#2: victim UE measures RSRP of aggressor UE within UL subband
- Method#3: victim UE measures RSSI within UL subband
- Note: the restriction in Rel-16 that CLI is only measured within DL BWP does not forbid UE to measure CLI in UL subband when UL subband is confined within DL BWP.

For UE-to-UE CLI-RSSI measurement/report across downlink subbands, the following methods are studied. Note that Alt #1 and Alt #2 are supported in existing specifications.

- Alt #1: separate CLI-RSSI measurement resources/reports in each DL subband
- Alt #2: CLI-RSSI measure/report in one DL subband only
- Alt #3: CLI-RSSI measurement/report based on non-contiguous CLI-RSSI resource across downlink subbands

Alt #1 allows flexible configuration of measurement reporting in one DL subband or two DL subbands but it consumes multiple CLI-RSSI measurement resources from the UE capability budget. Alt #2 restricts gNB configuration flexibility and does not account for whether or not the CLI is asymmetric across two DL subbands. This method does not consume multiple CLI-RSSI measurement resources from UE capability point of view. Alt #3 requires additional specification efforts to support non-contiguous CLI-RSSI resource allocation across downlink subbands. This method is similar to non-contiguous CSI-RS resource allocation. A single CLI-RSSI report based on non-contiguous CLI-RSSI resource may be sufficient. This method does not consume multiple CLI-RSSI measurement resources from UE capability point of view. Note that it does not imply whether L1 or L2 based measurement is supported.

Method #2 and Method #3 can be used for identifying the aggressor UE(s) if orthogonal resources are allocated for different aggressor UE(s). Method #2 and #3 can at least provide higher interference signal strength than inter-subband interference leakage based measurements in Method #1. Furthermore, such measurement is not subject to inter-cell DL interference. It is feasible for UE to measure RSRP/RSSI within UL subband if within active DL BWP and receive DL in DL subband(s) simultaneously similar as simultaneous RSRP/RSSI measurement and DL reception in Rel-16. The existing CLI measurement and report framework can be reused to support RSRP/RSSI measurements within UL subband when UL subband is confined within active DL BWP.

### [Description of claims related to UE]

Below, the above-described embodiments are described in detail from a perspective of an operation of a UE with reference to FIG. 5. Methods to be described below are merely distinguished for convenience of explanation. Thus, as long as the methods are not mutually exclusive, it is obvious that partial configuration of any method can be substituted or combined with partial configuration of another method.

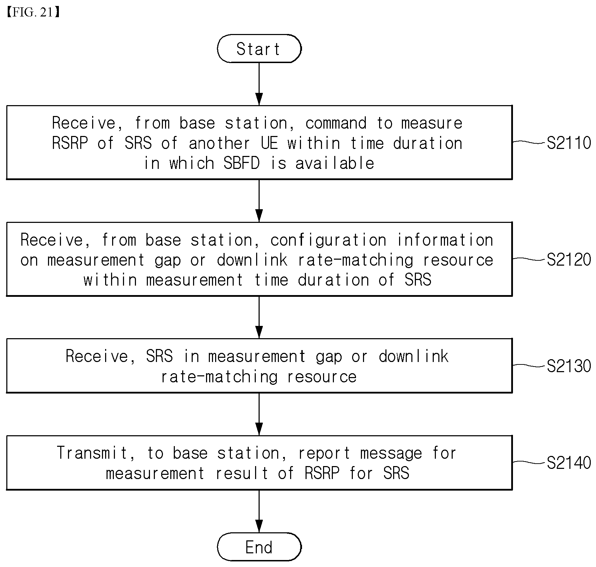

FIG. 21 illustrates an example of an operation process of a UE in a system applicable to the present disclosure.

In step S2110, a UE receives, from a base station (BS), a command to measure a reference signal received power (RSRP) of a sounding reference signal (SRS) of another UE within a time duration in which a subband full duplex (SBFD) is available.

In step S2120, the UE receives, from the base station, configuration information on a measurement gap or a downlink rate-matching resource within a measurement time duration of the SRS.

In step S2130, the UE receives, the SRS in the measurement gap or the downlink rate-matching resource.

In step S2140, the UE transmits, to the base station, a report message for a measurement result of the RSRP for the SRS.

According to various embodiments of the present disclosure, the configuration information may include information on a priority for each type of a downlink (DL) receive (Rx) signal. An embodiment of FIG. 21 may further include, based on the priority in the measurement gap or the downlink rate-matching resource, receiving a downlink signal with a higher priority than the SRS or receiving the SRS without receiving a downlink signal with a lower priority than the SRS.

According to various embodiments of the present disclosure, the configuration information may further include information of an SRS resource identifier (ID) and information of a specific UE ID related to the SRS resource ID. An embodiment of FIG. 21 may further include, based on the SRS being related to the specific UE ID, performing a correction on the measurement result of the RSRP.

According to various embodiments of the present disclosure, an embodiment of FIG. 21 may further include receiving correction information on the RSRP from the base station; and performing a correction on the measurement result of the RSRP based on the correction information.

According to various embodiments of the present disclosure, an embodiment of FIG. 21 may further include receiving designation information of a subband for measuring a cross-link interference received signal strength indicator (CLI-RSSI); measuring the CLI-RSSI for the subband based on the designation information; and transmitting a report message for a measurement result of the CLI-RSSI to the base station.

According to various embodiments of the present disclosure, based on multiple non-contiguous frequency bands being specified to measure the CLI-RSSI, the measurement result of the CLI-RSSI may be based on a sum of measurement results of the CLI-RSSI for the multiple non-contiguous frequency bands.

According to various embodiments of the present disclosure, the report message may include a resource ID for one of the multiple non-contiguous frequency bands. The measurement result of the CLI-RSSI may represent results measured in the multiple non-contiguous frequency bands.

According to various embodiments of the present disclosure, there is provided a user equipment (UE) in a wireless communication system. The UE may include a transceiver and at least one processor, and the at least one processor may be configured to perform the operation method of the UE based on FIG. 21.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 21 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the UE based on FIG. 21.

**[Description of claims related to BS]**

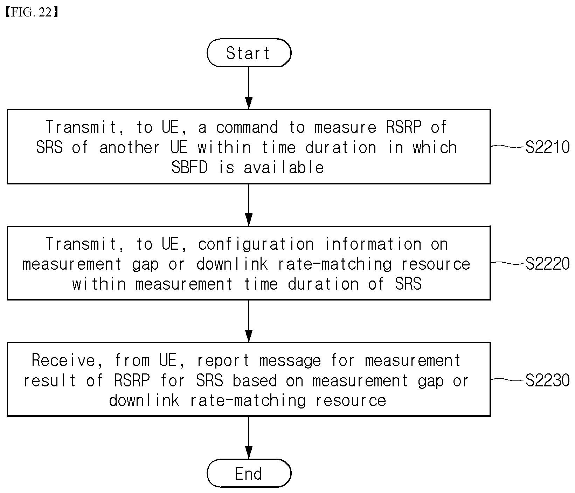

Below, the above-described embodiments are described in detail from a perspective of an operation of a base station with reference to FIG. 22. Methods to be described below are merely distinguished for convenience of explanation. Thus, as long as the methods are not mutually exclusive, it is obvious that partial configuration of any method can be substituted or combined with partial configuration of another method.

FIG. 22 illustrates an example of an operation process of a base station in a system applicable to the present disclosure.

In step S2210, a base station transmits, to a user equipment (UE), a command to measure a reference signal received power (RSRP) of a sounding reference signal (SRS) of another UE within a time duration in which a subband full duplex (SBFD) is available.

In step S2220, the base station transmits, to the UE, configuration information on a measurement gap or a downlink rate-matching resource within a measurement time duration of the SRS.

In step S2230, the base station receives, from the UE, a report message for a measurement result of the RSRP for the SRS based on the measurement gap or the downlink rate-matching resource.

According to various embodiments of the present disclosure, the configuration information may include information on a priority for each type of a downlink (DL) receive (Rx) signal. An embodiment of FIG. 22 may further include, based on the priority in the measurement gap or the downlink rate-matching resource, receiving, by the UE, a downlink signal with a higher priority than the SRS or receiving, by the UE, the SRS instead of a downlink signal with a lower priority than the SRS.

According to various embodiments of the present disclosure, the configuration information may further include information of an SRS resource identifier (ID) and information of a specific UE ID related to the SRS resource ID. An embodiment of FIG. 22 may further include, based on the SRS being related to the specific UE ID, performing a correction on the measurement result of the RSRP.

According to various embodiments of the present disclosure, an embodiment of FIG. 22 may further include transmitting correction information on the RSRP to the UE; and performing a correction on the measurement result of the RSRP based on the correction information.

According to various embodiments of the present disclosure, an embodiment of FIG. 22 may further include transmitting designation information of a subband for measuring a cross-link interference received signal strength indicator (CLI-RSSI); and receiving, from the UE, a report message for a measurement result of the CLI-RSSI for the subband based on the designation information.

According to various embodiments of the present disclosure, based on multiple non-contiguous frequency bands being specified to measure the CLI-RSSI, the measurement result of the CLI-RSSI may be based on a sum of measurement results of the CLI-RSSI for the multiple non-contiguous frequency bands.

According to various embodiments of the present disclosure, the report message may include a resource ID for one of the multiple non-contiguous frequency bands. The measurement result of the CLI-RSSI may represent results measured in the multiple non-contiguous frequency bands.

According to various embodiments of the present disclosure, there is provided a base station in a wireless communication system. The base station may include a transceiver and at least one processor, and the at least one processor may be configured to perform the operation method of the BS based on FIG. 22.

According to various embodiments of the present disclosure, there is provided a device controlling a base station in a wireless communication system. The device may include at least one processor and at least one memory operably connected to the at least one processor. The at least one memory may be configured to store instructions performing the operation method of the BS based on FIG. 22 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the BS based on FIG. 22.

## Wireless device applicable to the present disclosure

Examples of wireless devices to which various embodiments of the present disclosure are applied are described below.

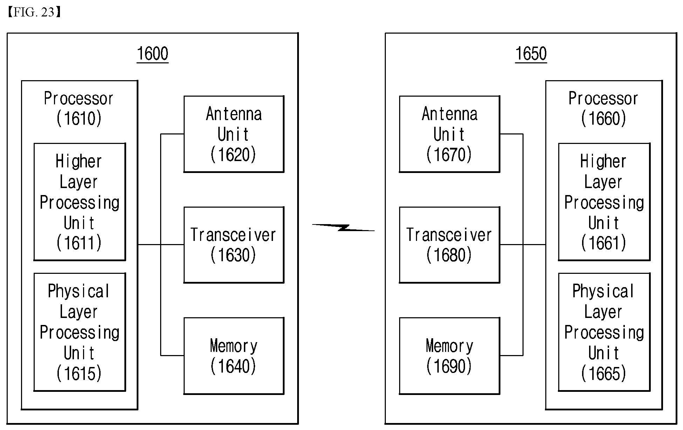

FIG. 23 illustrates an example of a structure of a first device and a second device in a system applicable to the present disclosure.

A first device 1600 may include a processor 1610, an antenna unit 1620, a transceiver 1630, and a memory 1640.

The processor 1610 may perform baseband-related signal processing and include a higher layer processing unit 1611 and a physical layer processing unit 1615. The higher layer processing unit 1611 may process operations of the MAC layer, the RRC layer, or higher layers. The physical layer processing unit 1615 may process the operation of the PHY layer. For example, if the first device 1600 is a base station (BS) device in BS-UE communication, the physical layer processing unit 1615 may perform uplink (UL) receive (Rx) signal processing, downlink (DL) transmit (Tx) signal processing, and the like. For example, if the first device 1600 is a first UE device in inter-UE communication, the physical layer processing unit 1615 may performs downlink Rx signal processing, uplink (UL) Tx signal processing, sidelink Tx signal processing, and the like. The processor 1610 may control the overall operation of the first device 1600 in addition to performing the baseband-related signal processing.

The antenna unit 1620 may include one or more physical antennas and support MIMO transmission/reception if the antenna unit 1620 includes a plurality of antennas. The transceiver 1630 may include a radio frequency (RF) transmitter and an RF receiver. The memory 1640 may store information processed by the processor 1610 and software, operating systems, and applications related to the operation of the first device 1600. The memory 1640 may also include components such as a buffer.

The processor 1610 of the first device 1600 may be configured to implement the operation of the BS in the BS-UE communication (or the operation of the first UE device in the inter-UE communication) in embodiments described in the present disclosure.

The second device 1650 may include a processor 1660, an antenna unit 1670, a transceiver 1680, and a memory 1690.

The processor 1660 may perform baseband-related signal processing and include a higher layer processing unit 1661 and a physical layer processing unit 1665. The higher layer processing unit 1661 may process the operation of the MAC layer, the RRC layer, or higher layers. The physical layer processing unit 1665 may process the operation of the PHY layer. For example, if the second device 1650 is a UE device in BS-UE communication, the physical layer processing unit 1665 may perform downlink Rx signal processing, uplink (UL) transmit (Tx) signal processing, and the like. For example, if the second device 1650 is a second UE device in inter-UE communication, the physical layer processing unit 1665 may perform downlink Rx signal processing, uplink Tx signal processing, sidelink Rx signal processing, and the like. The processor 1660 may control the overall operation of the second device 1660 in addition to performing the baseband-related signal processing.

The antenna unit 1670 may include one or more physical antennas and support MIMO transmission/reception if the antenna unit 1670 includes a plurality of antennas. The transceiver 1680 may include an RF transmitter and an RF receiver. The memory 1690 may store information processed by the processor 1660 and software, operating systems, and applications related to the operation of the second device 1650. The memory 1690 may also include components such as a buffer.

The processor 1660 of the second device 1650 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 1600 and the second device 1650, and redundant descriptions are omitted.

Wireless communication technologies implemented in the devices 1600 and 1650 according to the present disclosure may include LTE, NR, and 6G, as well as various other wireless communication technologies.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

**Claims**

1.  A method of operating a user equipment (UE) in a wireless communication system, the method comprising:

    receiving, from a base station (BS), a command to measure a reference signal received power (RSRP) of a sounding reference signal (SRS) of another UE within a time duration in which a subband full duplex (SBFD) is available;
    receiving, from the base station, configuration information on a measurement gap or a downlink rate-matching resource within a measurement time duration of the SRS;
    receiving, the SRS in the measurement gap or the downlink rate-matching resource; and
    transmitting, to the base station, a report message for a measurement result of the RSRP for the SRS.

2.  The method of claim 1, wherein the configuration information further includes information on a priority for each type of a downlink receive (Rx) signal, and
    wherein the method further comprises, based on the priority in the measurement gap or the downlink rate-matching resource, receiving a downlink signal with a higher priority than the SRS or receiving the SRS without receiving a downlink signal with a lower priority than the SRS.

3.  The method of claim 1, wherein the configuration information further includes information of an SRS resource identifier (ID) and information of a specific UE ID related to the SRS resource ID, and
    wherein the method further comprises, based on the SRS being related to the specific UE ID, performing a correction on the measurement result of the RSRP.

4.  The method of claim 1, further comprising:

    receiving, from the base station, correction information on the RSRP; and
    performing a correction on the measurement result of the RSRP based on the correction information.

5.  The method of claim 1, further comprising:

    receiving designation information of a subband for measuring a cross-link interference received signal strength indicator (CLI-RSSI);
    measuring the CLI-RSSI for the subband based on the designation information; and
    transmitting, to the base station, a report message for a measurement result of the CLI-RSSI.

6.  The method of claim 5, wherein, based on multiple non-contiguous frequency bands being specified to measure the CLI-RSSI, the measurement result of the CLI-RSSI is based on a sum of measurement results of the CLI-RSSI for the multiple non-contiguous frequency bands.

7.  The method of claim 6, wherein the report message includes a resource ID for one of the multiple non-contiguous frequency bands, and
    wherein the measurement result of the CLI-RSSI represents results measured in the multiple non-contiguous frequency bands.

8.  A method of operating a base station in a wireless communication system, the method comprising:

    transmitting, to a user equipment (UE), a command to measure a reference signal received power (RSRP) of a sounding reference signal (SRS) of another UE within a time duration in which a subband full duplex (SBFD) is available;

transmitting, to the UE, configuration information on a measurement gap or a downlink rate-matching resource within a measurement time duration of the SRS; and

receiving, from the UE, a report message for a measurement result of the RSRP for the SRS based on the measurement gap or the downlink rate-matching resource.

9. The method of claim 8, wherein the configuration information further includes information on a priority for each type of a downlink receive (Rx) signal, and

wherein the method further comprises, based on the priority in the measurement gap or the downlink rate-matching resource, receiving, by the UE, a downlink signal with a higher priority than the SRS or receiving, by the UE, the SRS instead of a downlink signal with a lower priority than the SRS.

10. The method of claim 8, wherein the configuration information further includes information of an SRS resource identifier (ID) and information of a specific UE ID related to the SRS resource ID, and

wherein the method further comprises, based on the SRS being related to the specific UE ID, performing a correction on the measurement result of the RSRP.

11. The method of claim 8, further comprising:

transmitting, to the UE, correction information on the RSRP; and

performing a correction on the measurement result of the RSRP based on the correction information.

12. The method of claim 8, further comprising:

transmitting designation information of a subband for measuring a cross-link interference received signal strength indicator (CLI-RSSI); and

receiving, from the UE, a report message for a measurement result of the CLI-RSSI for the subband based on the designation information.

13. The method of claim 12, wherein, based on multiple non-contiguous frequency bands being specified to measure the CLI-RSSI, the measurement result of the CLI-RSSI is based on a sum of measurement results of the CLI-RSSI for the multiple non-contiguous frequency bands.

14. The method of claim 13, wherein the report message includes a resource ID for one of the multiple non-contiguous frequency bands, and

wherein the measurement result of the CLI-RSSI represents results measured in the multiple non-contiguous frequency bands.

15. A user equipment (UE) in a wireless communication system, the UE comprising:

a transceiver;

at least one processor; and

at least one memory operably connectable to the at least one processor and configured to store instructions performing operations based on being executed by the at least one processor,

wherein the operations comprise all steps of a method according to any one of claims 1 to 7.

16. A base station in a wireless communication system, the base station comprising:

a transceiver;

at least one processor; and

at least one memory operably connectable to the at least one processor and configured to store instructions performing operations based on being executed by the at least one processor,

wherein the operations comprise all steps of a method according to any one of claims 8 to 14.

17. A control device controlling a user equipment in a wireless communication system, the control device comprising:

at least one processor; and

at least one memory operably connected to the at least one processor,

wherein the at least one memory is configured to store instructions performing operations based on being executed by the at least one processor, and
wherein the operations comprise all steps of a method according to any one of claims 1 to 7.

18. A control device controlling a base station in a wireless communication system, the control device comprising:

at least one processor; and
at least one memory operably connected to the at least one processor,
wherein the at least one memory is configured to store instructions performing operations based on being executed by the at least one processor, and
wherein the operations comprise all steps of a method according to any one of claims 8 to 14.

19. One or more non-transitory computer readable mediums storing one or more instructions,

wherein the one or more instructions are configured to perform operations based on being executed by one or more processors, and
wherein the operations comprise all steps of a method according to any one of claims 1 to 7.

20. One or more non-transitory computer readable mediums storing one or more instructions,

wherein the one or more instructions are configured to perform operations based on being executed by one or more processors, and
wherein the operations comprise all steps of a method according to any one of claims 8 to 14.

[FIG. 1]

【FIG. 2】

```
...    ┌─────────────────────────────────────────────────────┐    ...
       │                One Frame (10ms)                      │
       └─────────────────────────────────────────────────────┘

...    ┌───────────────────────────┐  ┌───────────────────────────┐    ...
       │     Half-Frame (5ms)       │  │     Half-Frame (5ms)       │
       └───────────────────────────┘  └───────────────────────────┘

...  ┌──────────┐     ┌──────────┐  ┌──────────┐     ┌──────────┐    ...
     │Subframe 0│ ... │Subframe 4│  │Subframe 5│ ... │Subframe 9│
     │  (1ms)   │     │  (1ms)   │  │  (1ms)   │     │  (1ms)   │
     └──────────┘     └──────────┘  └──────────┘     └──────────┘
```

Subframe (1ms)

| 15KHz | Slot (14 symbols) |
|---|---|

1ms

| 30KHz | Slot 0 (14 symbols) | Slot 1 |
|---|---|---|

500μs

| 60KHz | Slot 0 (14 symbols) | Slot 1 | Slot 2 | Slot 3 |
|---|---|---|---|---|

250μs

| 120KHz | Slot 0 (14 symbols) | Slot 1 | Slot 2 | Slot 3 | Slot 4 | Slot 5 | Slot 6 | Slot 7 |
|---|---|---|---|---|---|---|---|---|

125μs

【FIG. 3】

Resource grid

A carrier
(up to 3300
subcarriers,
i.e.,275 RBs)

A BWP

1RB=12
subcarriers

1 RE

1 subcarrier

1 symbol

k=0

l=0 · · ·

【FIG. 4】

DL only

UL only

UL control

DL control

Mixed UL-DL

DL    UL

【FIG. 5】

Carrier #0
Subband-wise Full Duplex

Carrier #0
Spectrum-Sharing Full Duplex

【FIG. 6】

【FIG. 7】

| HD | SBFD | SBFD | SBFD | HD |
|----|------|------|------|-----|
| | DL | DL | DL | |
| DL | DL+UL | DL+UL | DL+UL | UL |
| | DL | DL | DL | |

Frequency

Time

【FIG. 8】

| A | B | B | B | A |
|---|---|---|---|---|
| | DL | DL | DL | |
| DL | UL | UL | UL | UL |
| | DL | DL | DL | |

Frequency

Time

A: First time resource
B: Second time resource

【FIG. 9】

B

DL — First frequency resource

UL — Second frequency resource

DL — Third frequency resource

Frequency

Time

【FIG. 10】

| A | B | B | B | A |

DL | DL | DL | DL | UL

| DL+UL | DL+UL | DL+UL |

| DL | DL | DL |

Frequency

Time

A: First time resource
B: Second time resource

【FIG. 11】

【FIG. 12】

【FIG. 13】

| f1  f2 | D  D | U  U | D  D | U  U | D  U | D  U |
|--------|------|------|------|------|------|------|
| A1 | O  O | O  O | | | O | O |
| A2 | | | O  O | O  O | O | O |

【FIG. 14】

Panel group #1

Panel group #2

【FIG. 15】

K Tx Chains

K Rx Chains

DL

Shared-Tx/Rx
antenna array
L elements

DL slots/symbols

K Tx Chains

K Rx Chains

UL

Shared-Tx/Rx
antenna array
L elements

UL slots/symbols

【FIG. 16】

K/2 Tx Chains

K/2 Rx Chains

TxRU group #1

DL

Panel group #1
L/2 elements

K/2 Tx Chains

K/2 Rx Chains

TxRU group #2

DL

Panel group #2
L/2 elements

DL slots/symbols

K/2 Tx Chains

K/2 Rx Chains

TxRU group #1

DL

Panel group #1
L/2 elements

K/2 Tx Chains

K/2 Rx Chains

TxRU group #2

UL

Panel group #2
L/2 elements

SBFD slots/symbols

K/2 Tx Chains

K/2 Rx Chains

TxRU group #1

UL

Panel group #1
L/2 elements

K/2 Tx Chains

K/2 Rx Chains

TxRU group #2

UL

Panel group #2
L/2 elements

UL slots/symbols

【FIG. 17】

K Tx Chains

DL

Panel group #1
L elements

K Rx Chains

Panel group #2
L elements

DL slots/symbols

K Tx Chains

DL

Panel group #1
L elements

K Rx Chains

UL

Panel group #2
L elements

SBFD slots/symbols

K Tx Chains

Panel group #1
L elements

K Rx Chains

UL

Panel group #2
L elements

UL slots/symbols

【FIG. 18】

DL slots/symbols

SBFD slots/symbols

UL slots/symbols

【FIG. 19】

DL slots/symbols

SBFD slots/symbols

UL slots/symbols

【FIG. 20】

```
                                    ┌────────────────────┐
                                    │   Panel group #1   │
                              DL    │   L/2 elements     │
┌────────────────────┐        ●─────└────────────────────┘
│   K/2 Tx Chains    │────────●
├────────────────────┤              ┌────────────────────┐
│   K/2 Rx Chains    │              │   Panel group #2   │
└────────────────────┘              │   L/2 elements     │
                                    └────────────────────┘
```

DL slots/symbols

```
                                    ┌────────────────────┐
                                    │   Panel group #1   │
                              DL    │   L/2 elements     │
┌────────────────────┐        ●─────└────────────────────┘
│   K/2 Tx Chains    │────────●
├────────────────────┤              ┌────────────────────┐
│   K/2 Rx Chains    │────────●     │   Panel group #2   │
└────────────────────┘        ●─────│   L/2 elements     │
                              UL    └────────────────────┘
```

SBFD slots/symbols

```
                                    ┌────────────────────┐
                                    │   Panel group #1   │
                              UL    │   L/2 elements     │
┌────────────────────┐        ●─────└────────────────────┘
│   K/2 Tx Chains    │        ●
├────────────────────┤────────●    ┌────────────────────┐
│   K/2 Rx Chains    │              │   Panel group #2   │
└────────────────────┘              │   L/2 elements     │
                                    └────────────────────┘
```

UL slots/symbols

【FIG. 21】

```
                        ┌─────────────┐
                        │    Start    │
                        └──────┬──────┘
                               │
                               ▼
   ┌───────────────────────────────────────────────────┐
   │   Receive, from base station, command to measure   │
   │  RSRP of SRS of another UE within time duration    │─── S2110
   │           in which SBFD is available               │
   └───────────────────────┬───────────────────────────┘
                           │
                           ▼
   ┌───────────────────────────────────────────────────┐
   │ Receive, from base station, configuration information │
   │ on measurement gap or downlink rate-matching resource │─── S2120
   │         within measurement time duration of SRS      │
   └───────────────────────┬───────────────────────────┘
                           │
                           ▼
   ┌───────────────────────────────────────────────────┐
   │     Receive, SRS in measurement gap or downlink    │─── S2130
   │             rate-matching resource                 │
   └───────────────────────┬───────────────────────────┘
                           │
                           ▼
   ┌───────────────────────────────────────────────────┐
   │   Transmit, to base station, report message for    │─── S2140
   │       measurement result of RSRP for SRS           │
   └───────────────────────┬───────────────────────────┘
                           │
                           ▼
                    ┌─────────────┐
                    │     End     │
                    └─────────────┘
```

【FIG. 22】

```
                    ┌─────────────┐
                    │    Start    │
                    └──────┬──────┘
                           │
                           ▼
   ┌───────────────────────────────────────────────┐
   │   Transmit, to UE, a command to measure RSRP of│
   │   SRS of another UE within time duration in which│──── S2210
   │            SBFD is available                   │
   └───────────────────────┬───────────────────────┘
                           │
                           ▼
   ┌───────────────────────────────────────────────┐
   │  Transmit, to UE, configuration information on │
   │ measurement gap or downlink rate-matching resource│──── S2220
   │      within measurement time duration of SRS   │
   └───────────────────────┬───────────────────────┘
                           │
                           ▼
   ┌───────────────────────────────────────────────┐
   │  Receive, from UE, report message for measurement│
   │ result of RSRP for SRS based on measurement gap or│──── S2230
   │        downlink rate-matching resource         │
   └───────────────────────┬───────────────────────┘
                           │
                           ▼
                    ┌─────────────┐
                    │     End     │
                    └─────────────┘
```

【FIG. 23】

## INTERNATIONAL SEARCH REPORT

| International application No. |
| --- |
| **PCT/KR2023/015123** |

### A. CLASSIFICATION OF SUBJECT MATTER

**H04W 24/08**(2009.01)i; **H04J 11/00**(2006.01)i; **H04B 17/345**(2015.01)i; **H04W 24/10**(2009.01)i; **H04L 5/00**(2006.01)i

According to International Patent Classification (IPC) or to both national classification and IPC

### B. FIELDS SEARCHED

Minimum documentation searched (classification system followed by classification symbols)

H04W 24/08(2009.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: resource, measurement gap, downlink rate-matching, allocation, configuration, SBFD(subband full duplex), SRS, measurement, inter-subband, SRS-RSRP, report

### C. DOCUMENTS CONSIDERED TO BE RELEVANT

| Category* | Citation of document, with indication, where appropriate, of the relevant passages | Relevant to claim No. |
| --- | --- | --- |
| Y | NEW H3C. Study on potential enhancement on dynamic/flexible TDD. R1-2208726, 3GPP TSG RAN WG1 #110bis-e, eMeeting. 29 September 2022. See sections 1-3. | 1,8,15-20 |
| A | | 2-7,9-14 |
| Y | US 2022-0045820 A1 (APPLE INC.) 10 February 2022 (2022-02-10) See claims 1, 2 and 6. | 1,8,15-20 |
| A | SAMSUNG. SBFD feasibility and design considerations for NR duplex evolution. R1-2206421, 3GPP TSG-RAN WG1 Meeting #110. Toulouse, France. 12 August 2022. See sections 2-5. | 1-20 |
| A | MODERATOR (CATT). Summary #5 of subband non-overlapping full duplex. R1-2208122, 3GPP TSG RAN WG1 #110. Toulouse, France. 28 August 2022. See section 2. | 1-20 |
| A | LG ELECTRONICS. Study on Subband non-overlapping full duplex. R1-2207364, 3GPP TSG RAN WG1 #110. Toulouse, France. 12 August 2022. See section 2. | 1-20 |

☐ Further documents are listed in the continuation of Box C.　　☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **11 January 2024** | **11 January 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2023/015123** |

| Patent document cited in search report | Publication date (day/month/year) | Patent family member(s) | Publication date (day/month/year) |
| --- | --- | --- | --- |
| US 2022-0045820 A1 | 10 February 2022 | CN 114071703 A | 18 February 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TR38.858 v1.0.0*, September 2023